(19) Europäisches Patentamt / European Patent Office / Office européen des brevets

(11) **EP 1 937 372 B1**

(12) **EUROPÄISCHE PATENTSCHRIFT**

(45) Veröffentlichungstag und Bekanntmachung des Hinweises auf die Patenterteilung:
**04.11.2009 Patentblatt 2009/45**

(51) Int Cl.:
***A63B 69/36*** *(2006.01)*

(21) Anmeldenummer: **06791401.0**

(22) Anmeldetag: **26.09.2006**

(86) Internationale Anmeldenummer:
**PCT/DE2006/001700**

(87) Internationale Veröffentlichungsnummer:
**WO 2007/033664 (29.03.2007 Gazette 2007/13)**

(54) **MESSVORRICHTUNG ZUR MESSUNG VON TREFFMOMENTFAKTOREN EINES GOLFSCHLÄGERS**

MEASURING DEVICE FOR THE MEASUREMENT OF IMPACT FACTORS OF A GOLF CLUB

DISPOSITIF DE MESURE POUR MESURER DES FACTEURS DE MOMENT D'IMPACT D'UNE CANNE DE GOLF ET DISPOSITIF D'ETALONNAGE POUR MESURER DES ECARTS ANGULAIRES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.09.2005 DE 102005046085**

(43) Veröffentlichungstag der Anmeldung:
**02.07.2008 Patentblatt 2008/27**

(73) Patentinhaber: **HGM GmbH Haag Golf-Messtechnik 65620 Waldbrunn (DE)**

(72) Erfinder:
• **HAAG, Hans-Joachim 65620 Waldbrunn (DE)**
• **GÖDDE, Josef 35753 Greifenstein-Nenderoth (DE)**

(56) Entgegenhaltungen:
**US-A- 5 803 823 US-A- 6 095 928**

EP 1 937 372 B1

## Beschreibung

Die Erfindung betrifft eine Messvorrichtung zur Messung von Treffmomentfaktoren eines Golfschlägers, bestehend aus einem Messgerät mit mindestens einer horizontal ausgerichteten Reflexionslichtschranke, einer in das Messgerät integrierten Messdatenerfassungseinrichtung, Reflektoren mit retroreflektierenden Flächen am Golfschläger, die mit den Reflexionslichtschranken korrespondierend in Verbindung stehen und einer Auswerte-, Informationsausgabe- und Speichereinheit, an die die Messdatenerfassungseinrichtung die erfassten Messdaten überträgt.
Die Erfindung betrifft weiterhin eine Kalibrationsvorrichtung zur Messung von Winkelabweichungen, insbesondere für die erfindungsgemäße Messvorrichtung.

Allgemein bekannt ist der Satz: "So wie der Ball getroffen wird, so fliegt (oder rollt) er". Im "PGA Teaching Manual, Lehr- und Lernunterlagen für Auszubildende zum Diplom-Golfprofessional", herausgegeben 2001 von der Professional Golfers Association of Germany e.V. PGA Aus- und Fortbildungsgesellschaft mbH, beschreibt der PGA-Professional Oliver Heuler in seinem Artikel "Golftechnik", dass während des Treffmoments acht Faktoren bestimmen, wie der Golfball fliegen wird.

Dabei ist es egal, wie diese Treffmomentfaktoren zustande gekommen sind. Bei den Treffmomentfaktoren handelt es sich um

1. Schlagflächenstellung
2. Dynamischer Lie
3. Dynamischer Loft
4. Horizontaler Eintreffwinkel (Schwungbahn)
5. Vertikaler Eintreffwinkel
6. Sweetspot treffen (horizontal)
7. Sweetspot treffen (vertikal)
8. Schlägerkopfgeschwindigkeit.

Um diese Treffmomentfaktoren zu ermitteln und für Lehrzwecke zu nutzen, wurden bereits viele Anstrengungen unternommen. So ist aus der US 4,304,406 bekannt, die Treffmomentfaktoren

- Schlagflächenstellung Winkel offen/geschlossen ($W_{og}$),
- Horizontaler Eintreffwinkel in/out ($W_{io}$),
- Sweet-Spot-Position (**SSP)** und
- Schlägerkopfgeschwindigkeit (**V**)

mit Photo- oder Infarotdetektoren zu messen. Eine Vielzahl solcher Detektoren sind nach einem bestimmten Muster in einer Abschlag-Matte angebracht und werden von einer intensiven (Infrarot-)Lichtquelle oberhalb des Tees angestrahlt. Die Detektoren messen mit hoher Zeitauflösung die relativen Zeitpunkte der Beschattung während der Schlägerkopf-Passage. Aus der bekannten Geometrie des Detektoren-Musters, dem Ort der Lichtquelle und den Beschattungs-Zeitpunkten lassen sich $W_{og}$, $W_{io}$, SSP und die Schlägerkopfgeschwindigkeit V berechnen.
Das prinzipiell robuste Messverfahren hat jedoch den Nachteil, dass die (Infrarot-) Lichtquelle eine Störung im Blickfeld des Spielers darstellt. Außerdem können die Detektoren in der Abschlag-Matte verschmutzen und/oder vom Schlägerkopf beschädigt werden. Ein weiterer Nachteil besteht darin, dass für die Messungen eine ganz spezielle Abschlag-Matte erforderlich ist.

Eine weitere Methode zur Bestimmung der Treffmomentfaktoren $W_{og}$, $W_{io}$, SSP und V ist aus der US 4,254,956 bekannt. Hierbei kommen ebenfalls speziell angeordnete optische Sensoren in einer Abschlag-Matte zur Anwendung. Die Methode nutzt jedoch nicht nur klar definierte Strahlunterbrechungs-Zeitpunkte, sondern das natürliche Umgebungs-Licht und analoge Signale, die den Grad der Beschattung spezieller Diffusor-Scheiben bei der Passage des Schlägerkopfes repräsentieren. Das macht eine Auswertung jedoch schwierig und ist besonders dort problematisch, wo die Umgebungshelligkeit schnell variiert. Dies ist beispielsweise - entgegen dem Augenschein - immer der Fall, wo im Licht von Leuchtstoffröhren mit klassischen Vorschaltgeräten trainiert wird.

In der US 4,306,722 wird eine Methode beschrieben, bei der mit hoher Genauigkeit der Treffmomentfaktor $W_{og}$ gemessen werden kann. Dabei wird eine Art Reflex-Lichtschranke eingesetzt. Ein Spiegel am Schlägerkopf bestimmt in Abhängigkeit vom $W_{og}$ den Punkt, wo der Lichtschranken-Strahl auf einen flächig ausgedehnten Detektor trifft. Dieser Punkt wird mit einer analog arbeitenden Elektronik bestimmt und in eine $W_{og}$-Anzeige umgerechnet. Diese Methode kann zwar prinzipiell sehr genaue Ergebnisse liefern, hat aber in der Praxis gravierende Nachteile:

1. Zwischen Spieler und Tee muss ein Spiegel angebracht und dabei exakt ausgerichtet werden.
2. Auch am Schlägerkopf selbst muss ein genau ausgerichteter Spiegel angebracht werden, der bei nicht exakter Ballberührung beschädigt werden kann.

Den oben aufgeführten Patenten ist gemeinsam, dass ihre Realisierung auf eine große Zahl von Detektoren oder auf eine genaue, in der Praxis relativ schwer zu realisierende Strahlführung angewiesen ist. Diese und ähnliche Messanordnungen, insbesondere mit speziell angeordneten optischen Sensoren in Abschlagmatte, die mit Umgebungslicht oder als Reflextaster arbeiten sind heute am Markt erhältlich.

Eine weitere Methode zur Messung der Treffmomentfaktoren $W_{og}$, $W_{io}$, SSP, und V sowie zusätzlich der Ball-Abflug-Geschwindigkeit und der Rotation des Balls (Sidespin und Backspin) wird in der CA 2 367 797 beschrieben. Bei dieser Methode wird der Golfschläger mit Punkten aus besonders gut reflektierender Folie beklebt.

Zwei elektronische Kameras und ein Blitzlicht nehmen die kritische Phase des Golfschlags auf. Eine Lichtschranke sorgt für das Timing von Belichtung und der Auslösung des Blitzlichts. Der eingesetzte Golfball trägt besondere Farbringe. Während des Golfschlags werden die Blitze mehrfach ausgelöst, so dass die Kameras mehrfach belichtete (Stereo-)Bilder liefern, in denen ein Computer die reflektierenden Punkte sucht und daraus die Schläger-Position im Belichtungsmoment berechnet. Derselbe Rechner bestimmt die Golfball-Bahn und -Drehung aus den Bildern des Golfballs und der darauf befindlichen Farbringe.

Diese Methode liefert zahlreiche Informationen über die Kinetik des Schlägers, hat aber auch gravierende Nachteile. Der Aufbau ist so sperrig, dass Üben nur in festen Kabinen möglich sein dürfte. Dazu kommt die Anordnung eines Astes der triggernden Lichtschranke zwischen Spieler und Tee. Auch dürfte der Anschaffungspreis der Komponenten einer weiten Verbreitung im Wege stehen.

Aus der US 6,095,928 ist eine dreidimensionale Schwungbahnanalyse bekannt, wobei sich das Objekt durch einen durch ein 3D-Koordinatensystem definierten Raum bewegt. Gemessen werden die Winkel, mit denen das Objekt bzw. der Schlägerkopf den Raum durchschlägt. IR LED's produzieren auseinandergehende Lichtkegel, die auf einen am Schlägerkopf und/oder auf einen am Schlägerschaft oberhalb des Schlägerkopfes befestigten kugel- oder flächenförmigen Reflektor fallen, wobei die Ausfallwinkel durch Sensoren, z. B. Photodioden (IAD's) gemessen werden. Angezeigt wird die Schwungbahn des Schlägerkopfes. Die Treffmomentfaktoren werden auf diese Weise nicht ermittelt, dafür ist die Messanordnung ungeeignet. Nachteilig ist außerdem die Störanfälligkeit der Messung durch die Verwendung kugelförmiger Reflektoren, die wiederum den Einsatz von Spezialfiltern erfordern.

Auch aus der WO 98/18010 ist ein Golfschwunganalysegerät bekannt, das die Vor-Impact- und Nach-Impact-Position und/oder die Bewegung eines Golfschlägerkopfes und/oder eines Golfballs (Spin-Komponenten) während eines Golfschlages misst. Das Messgerät besteht aus einer oder mehreren Lichtquellen zur Bereitstellung von Licht oder für die Reflexion, durch einen bewegten Gegenstand und ein oder mehrere auf Licht reagierende Mittel (schlitzförmige Öffnungen und/oder zylindrische Linsen in einer definierten Ebene angeordnet), die ein Signal liefern wenn der bewegte Gegenstand eine definierte Erkennungsebene unterbricht. Der bewegte Gegenstand ist beispielsweise ein Golfschläger, an dessen Schlägerkopf eine kreis- oder streifenförmige Reflektorzone oder LED's angebracht sind. Zur Ermittlung der Treffmomentfaktoren ist dieses Gerät nicht geeignet. Analoges gilt für die US 2005/0130755 A1.

Die DE 101 03 449 A1 offenbart eine mobile Vorrichtung zum Erfassen der Geschwindigkeit und/oder des Geschwindigkeitsprofils eines Golfschlägerkopfes, wobei die Messung mit oder ohne Golfball durchgeführt werden kann. Hierzu ist am Golfschlägerkopf eine Messeinrichtung und am Golfschlägerschaft eine Anzeigeeinrichtung angeordnet und dazwischen eine flexible Verbindungsleitung und/oder eine drahtlose Verbindung zum Übertragen von Daten zwischen der Messeinrichtung (10) und der Anzeigeeinrichtung vorgesehen. Die Messung erfolgt auf Basis der relativen Luftströmungsgeschwindigkeit mittels eine Pitotrohrs oder eines Prandtlschen Staurohrs oder auf Basis des Unterdrucks oder Sogs mittels eines Venturirohrs oder auf elektronischem Wege (Messung der Bewegung des Golfschlägerkopfes gegenüber dem umgebenden Medium bzw. gegenüber der Umgebungsmaterie mittels einer kleinen und leichten, am Golfschlägerkopf anbringbaren Messeinrichtung ohne extern angeordnete Sende- und Empfangseinheit, oder mittels Radartechnik (Dopplersche Frequenzverschiebung) oder auch im Wege der Drosselmessung. Beim Messen mit Radar wird auf dem Schlägerkopf an der dem Golfschlägerschaft zugewandten Seite eine Reflektoreinheit befestigt. Alternativ oder in Ergänzung zur Reflektoreinheit ist auch das dem Golfball zuwendbare Schlägerblatt des Schlägerkopfes als Reflektorfläche einsetzbar.

Da das Radargerät hinter dem Golfball in Ballflugrichtung angeordnet ist, besteht immer die Gefahr, dass der abfliegende, schlecht getroffene Golfball auf das Radargerät trifft und dieses beschädigt. Mit einer solchen einfachen Messvorrichtung können keine Treffmomentfaktoren gemessen werden. Die Anzeige der Höchstgeschwindigkeit sagt noch nichts darüber aus, wie hoch die Geschwindigkeit exakt im Treffmoment war, denn die höchste Geschwindigkeit des Schlägerkopfes kann sowohl kurz vor als auch hinter dem tatsächlichen Golfball-Treffpunkt erreicht worden sein.

Ein Trainingsgerät für das Putten ist aus der DE 101 19 740 A1 bekannt. Zur Kontrolle der Richtung der Schlagfläche des Putters ($W_{og}$) wird von einem Sendegerät ein gebündelter Lichtstrahl zu einem Reflektor am Putter geleitet und zu einem Empfangsgerät reflektiert. Das Empfangsgerät ist mit einer horizontalen Reihe von besonders eng angeordneten Sensoren (Fototransistoren) versehen, die beidseitig neben einem zentralen Sensor angeordnet sind. Der Reflektor ist ein planer Spiegel, der mit seiner Rückfläche auf der Schlagfläche aufliegt. Das Sendegerät enthält einen Laser, dessen vom Spiegel reflektierter gebündelter Lichtstrahl von den nebeneinander im Empfangsgerät angeordneten Sensoren erfasst wird. Ein Schaltorgan (Lichtschranke/Phototransistor), das beim Puttschwung über die Golfballposition ein Signal abgibt, schaltet das Trainingsgerät für nur einen kurzen Moment ein. Dem Golfspieler werden ganz geringe Abweichungen des von ihm geschwungenen Putters von der Idealrichtung zur Zielposition und darüber hinaus weitere Abweichungsschritte im Treffpunkt über die jedem Sensor zugeordneten Leuchtdioden im Empfangsgerät angezeigt. Das bedeutet, dass angezeigt wird, ob der "Sweetspot" (SSP) getroffen oder verfehlt wurde. Zentrale Sensor und Zielposition liegen dabei vertikal genau übereinander. Das Putten mit einem Golfball ist bei diesem Trainingsvorgang jedoch ausgeschlossen, ansonsten würde der Spiegel beschädigt. Es ist zwar eine Ausführungsform erwähnt, bei der der Spiegel seitlich versetzt wird damit ein Golfball geschlagen werden kann, für einen vollen Schwung ist eine solche Vorrichtung jedoch weder beim Schlagen mit noch ohne Golfball geeignet.

Aus der US 2003/0054898 A1 ist ein Golfschlag-Analyse-System bekannt. In der Oberfläche eines Schwung-Analyse-Gehäuses aus einem nichtmetallischen Material sind ein Tee und optische Sensoren, vorzugsweise Infrarot-Reflex-Lichtschranken in drei senkrecht zur Schwungbahn verlaufenden Reihen, rechts und links vom Tee montiert. Mittig zum Tee können in einem Turm an den Stirnseiten des Schwung-Analyse-Gehäuses weitere optische Sensoren angeordnet sein, die eine Höhenmessung ermöglichen. Die Sensoren senden einen schmalen Infrarotstrahl aus. Auf der Unterseite des Schlägerkopfes ist ein reflektierender Streifen angebracht. Die Infrarotstrahlen werden von diesem reflektiert beim Durchschwung des Schlägerkopfes. Anzeigeelemente generieren ein elektrisches Signal, das über herkömmliche Kabel zu einer Messdatenerfassungseinrichtung (Controller) geleitet und in ein digitales Signal konvertiert wird. Von dort werden die Signale an eine Auswerte-Informationsausgabe- und Speichereinheit (Computer) weitergeleitet, die die Treffmomentfaktoren $W_{og}$, $W_{io}$, SSP, $W_{dl}$ und V aus dem Abstand der einzelnen Signale errechnen. Ausgegeben werden sowohl die aktuellen Daten als auch vergleichende historische Schwunginformationen.
Dieses Golfschlag-Analyse-System arbeitet mit zahlreichen Infrarot-Reflex-Lichtschranken (37 Paare aus QED123/QS-D123) mit jeweils geringer Winkelauflösung. Der Öffnungswinkel der Sender beträgt $\pm 9°$, der Empfänger $\pm 12°$. Die hohe Zahl von Infrarot-Reflex-Lichtschranken macht die vorgeschlagene Anordnung teuer. Außerdem hat sie allein für die Infrarot-Emitter einen Stromverbrauch von deutlich über 3 A, was einen Batterie-Betrieb erschwert. Allerdings dienen einige der Sensoren allein dazu, das System zu triggern und die Bestromung der nachfolgenden Sensoren einzuschalten. Die wesentlichen Komponenten sind in eine spezielle Abschlag-Matte aus elastischem Material integriert. Solch ein Aufbau ist empfindlich gegen zu tief geführte Schläge, zumal für die beschriebene Funktionsweise Position und Ausrichtung aller Lichtschranken essentiell ist. Zu tief geführte Schläge machen auch den unter dem Schlägerkopf angeklebten retroreflektierenden Streifen rasch unbrauchbar, so dass dieser als Verbrauchsmaterial betrachtet werden muss. Eine gute Zeitauflösung der vorgeschlagenen Anordnung ist nur dann zu erwarten, wenn der Schlägerkopf die Abschlag-Matte in geringem Abstand überstreicht. Andernfalls dürften die Öffnungswinkel der Sensoren zu einem stark störenden Zeit-Jitter der Ausgangssignale führen, was die Messung ungenau bis unbrauchbar macht. (Schon in 5 cm Abstand hat der Erfassungs-Kegel einen Durchmesser von 1,5 cm.) Der notwendigerweise kurze Arbeitsabstand führt zu einem weiteren Problem: Golfschlägerköpfe haben typ-abhängig sehr unterschiedlich geformte äußere Konturen, häufig mit reflektierenden, fast spiegelnden Oberflächen. Daher ist zu erwarten, dass die Infrarot-Reflex-Lichtschranken nicht nur auf Reflexionen vom retroreflektierenden Streifen, sondern auch auf Reflexionen von anderen Punkten der Schlägerkopf-Oberfläche ansprechen.

Eine Weiterführung von US 2003/0054898 A1 wird in der US 2005/0202907 A1 beschrieben. Es werden auch technische Details offenbart, welche eine Abschätzung der erreichbaren Genauigkeit erlauben. Die Patentschrift erwähnt an mehreren Stellen eine Zeitauflösung der Sensoren von 10 $\mu$s (1/100000 s). In dieser Zeit legt der Golfschlägerkopf bei 100 km/h (was einem Drive-Schlag mit mäßiger Geschwindigkeit entspricht) ca. 0,278 mm zurück. Der Offen/Geschlossen-Winkel wird dabei von zwei Sensoren bestimmt, die auf einer Linie senkrecht zur Bewegungsrichtung des Schlägerkopfes maximal 5 cm Abstand haben können, damit sie sicher als Paar überflogen werden. Dann beträgt die Winkelauflösung maximal

$$\arcsin\left(\frac{0,27mm}{50mm}\right) = 0,31°$$

Die Höhenmessung erfolgt bei der US 2005/0202907 A1 mit bis zu 4 Triangulations-Abstands-Sensoren. Diese Sensoren müssen im Vergleich zu anderen Industrie-Applikationen relativ schnell ansprechen (bei lediglich 100 km/h und einer bei Eisen durchaus üblichen Tiefe von 15 mm verweilt die Unterkante 0,54 ms über dem Sensor). Damit sind teure Sonderanfertigungen (Standard-Sensor ca. 1000 €) nötig, die zudem der Gefahr der Zerstörung durch den Schlägerkopf ausgesetzt sind.

Aus der WO 99/49944 ist eine Messvorrichtung bekannt, bei welcher die Schlag-Parameter mit vier am Schläger angebrachten Laser-Sensoren gemessen werden. Die Sensoren passieren einen oder mehrere Laser-Fächer, die von einer oder mehreren zwischen den Füßen des Spielers angebrachten Laserquellen ausgehen. Die Antworten der Laser-Sensoren werden über eine Kurzstrecken-Funkverbindung zur Auswerte-Elektronik übertragen. Für den Offen/Geschlossen-Winkel wird eine Auflösung von 0,3° und für den dynamischen Loft von 0,1°, für den dynamischen Lie von 0.1° angegeben. Die Sweetspot-Auflösung des Prototyps wird mit 5 mm angegeben.

Nachteilig bei dieser Messvorrichtung ist, dass die Laserquelle zu Füßen des Spielers einen gefährlichen potentiellen Stolperstein darstellt. Außerdem sind die verwendeten vertikal orientierten Laserfächer entweder in ihrer Leistungsdichte stark begrenzt oder können in der Nähe des Austritts zu Augen-Irritationen oder gar Schädigungen führen.

In der WO 2004/067099 A2 wird eine Golfschwung-Analyse mittels einer preisgünstigen Video-Kamera beschrieben. Am Schlägerschaft sind direkt unterhalb der Griffzone Kugeln mit ca. 10 cm ⌀ und markanten, kontrastreichen Zeichnungen angebracht. Alternativ enthalten die Kugeln aktive Lichtquellen zum Üben bei schlechten Lichtverhältnissen. So können per Software die Bahn des Schlägers in der Schlagebene und insbesondere die Körperhaltung während verschiedener Phasen der Schlagbewegung rekonstruiert werden, um den Spieler zu korrigieren. Angaben zur erreichbaren Genauigkeit in Bezug auf Treffmomentfaktoren wie Sweetspot oder Offen/Geschlossen-Winkel werden nicht gemacht. Als Sensor dient eine USB-Kamera. USB-Kameras sind zwar preiswert, haben aber eine schlechte Framerate (im Konsumer-Bereich heute max. 80 Fps) und sind nicht mit den Schlagphasen synchronisierbar.

Ebenfalls ein Analysegerät mit zwei Kameraeinheiten ist aus der US 5,803,823 bekannt. Das Analysegerät überwacht die Bewegung eines Golfschlägers kurz vor und bei der Berührung eines Golfballs sowie die Charakteristika der Bewegung des Golfschlägers kurz vor der Berührung des Golfballs. Beide Kameraeinheiten nehmen flächige Bilder auf. Auf dem Golfschläger und auf dem Golfball sind jeweils drei oder mehr punktförmige Flächen aus retroreflektierendem Material so angeordnet, dass zwei durch eine Blitzeinrichtung ausgelöste Lichtblitze von den punktförmigen Flächen reflektiert werden und mit den dem Golfspieler gegenüberliegend angeordneten Kameraeinheiten als flächige Muster erfasst werden, wenn die Kameraverschlüsse offen sind. Aus den Punktmustern werden die Bewegungsbahn des Schlägerkopfes und seine Orientierung relativ zum Golfball bestimmt, wobei aus dem Vergleich von zwei Positionen der beleuchtbaren Flächen am Golfschläger in Bezug auf die Position der beleuchtbaren Flächen am Golfball die Charakteristika der Bewegung des Golfschlägers ermittelt werden.

Eine derartige Bildanalyse ist aufwändig, teuer und grob gerastert. Nachteilig bei einem derartigen Analysegerät ist außerdem, dass auf dem Golfball reflektierende Punkte aufgebracht werden müssen, die bei jedem Schlag beschädigt werden können. Auch ist das Spielen ohne Golfball mit einer solchen Messvorrichtung nicht möglich.

In der US 5,803,823 werden außerdem zwei Kalibrationsvorrichtungen für die Messvorrichtung beschrieben. Die erste Kalibrationsvorrichtung besteht aus einer dreidimensionalen Schablone mit 20 retroreflektierenden Punkten von ¼" Durchmesser zur Kalibration der beiden Kameras. Die zweite Kalibrationsvorrichtung versieht zur Lokalisierung des Sweetspot die Messvorrichtung mit der Information, wo genau sich die geometrische Mitte des Schlägerblattes des Schlägerkopfes befindet. Dazu wird eine kreisförmige Platte mit drei in einer X-Achse angeordneten, rechtwinklig von der Platte abstehenden, zylinderförmigen Zapfen, die ebenfalls mit je einem retroreflektierenden Punkt versehen sind, auf das Schlägerblatt aufgeklebt und vermessen. Mit einem Kalibrationsfoto werden elf Konstanten von jeder Kamera sowie die X-, Y- und Z-Achsen gemessen.

Der in den Patentansprüchen 1 und 27 angegebenen Erfindung liegt die Aufgabe zugrunde, eine Messvorrichtung zur Messung der Treffmomentfaktoren zu schaffen, die sowohl einfach in der Handhabung, mobil, kompakt, in freier Natur als auch in geschlossenen Räumen mit und ohne Golfball anwendbar, für Rechts- und Linkshänder gleich gut geeignet und dennoch kostengünstig ist sowie mit einem Messverfahren ausgestattet ist, das hochpräzise arbeitet und eine Kalibrationsvorrichtung zu schaffen, die zuverlässige Messwerte gewährleistet.

Diese Aufgabe wird durch die in den Patentansprüchen 1 und 27 sowie in den Unteransprüchen aufgeführten Merkmale gelöst.

Das Messgerät der erfindungsgemäßen Messvorrichtung ist dem Golfspieler gegenüberliegend angeordnet. Am Golfschlägerschaft des Golfschlägers ist eine Reflektorgruppe mittels einer lösbaren, festsitzenden Klemmverbindung befestigt, wobei die Reflektorgruppe mindestens zwei streifenförmige Reflektoren mit retroreflektierenden Flächen aufweist und mindestens drei retroreflektierende Flächen sind in einer festgelegten Geometrie am Golfschlägerschaft und/oder an der Reflektorgruppe angeordnet. Mindestens eine Reflexionslichtschranke ist mit mindestens einem horizontalen Strahl rechtwinkelig zur Idealbahn des Schlägerkopfes im Bereich des Tees und/oder Golfballs auf die Reflektorgruppe ausgerichtet. Beim Durchschlagen des Strahls lösen die drei streifenförmigen retroreflektierenden Flächen nacheinander zeitlich versetzte Messdaten in Form von Impulsen aus, die der Empfänger der Reflexionslichtschranke empfängt und an die Messdatenerfassungseinrichtung weitergibt. Diese überträgt die Messdaten an eine Auswerte-, Informationsausgabe- und Speichereinheit.

In einem seitlichen Abstand zur ersten Reflexionslichtschranke kann mindestens eine zweite Reflexionslichtschranke angeordnet sein, deren Strahl in einem definierten spitzen Winkel den Strahl der ersten Reflexionslichtschranke kreuzt. Weitere Reflexionslichtschranken sind in den Unteransprüchen vorgesehen. Diese sorgen vor allem für eine sichere und vollständige Erfassung aller von den Reflektoren der Reflektorgruppe reflektierten und für die Berechnung der Treffmomentfaktoren notwendigen Impulse, auch Pulse genannt.

Die erfindungsgemäße Kalibrationsvorrichtung dient der Messung von Winkelabweichungen von einem 90°-Winkel einer an einem Schlägerschaft eines Golfschlägers nach Augenmaß in etwa rechtwinkelig zum Schlägerblatt des Schlägerkopfes befestigten Reflektorgruppe. Diese Kalibrationsvorrichtung besteht aus einem Kalibrator mit mindestens einer rotierenden Reflexionslichtschranke, einer mechanischen Justiereinrichtung, die in einem exakten Abstand vom Kalibrator angeordnet ist, wobei die Justiereinrichtung mit einem Anschlagelement für das Schlägerblatt des Schlägerkopfes versehen ist sowie mindestens zwei Reflektoren mit retroreflektierenden Flächen, die hinter der zu kalibrierenden Reflektorgruppe rechts und links und von dieser seitlich beabstandet angebracht sind. Eine solche Kalibrationsvorrichtung ist in das Messgerät nach Patentanspruch 1 integriert.

Die Erfindung, für die in den Patentansprüchen Schutz begehrt wird, ist in der Lage, folgende Treffmomentfaktoren zu messen:

Mit einem einfachen Messgerät, für das in seiner einfachsten Ausstattung gemäß Patentanspruch 1 nur eine Reflexionslichtschranke erforderlich ist und dem Einsatz einer Reflektorgruppe nach Patentanspruch 7, die Treffmomentfaktoren

1. Schlägerkopfgeschwindigkeit V
2. Schlagflächenstellung als Winkel offen/geschlossen $W_{og}$ und
3. Sweetspot Vertikal.

Bei Verwendung einer zweiten horizontal ausgerichteten Reflexionslichtschranke in einem definierten spitzen Winkel zur ersten Reflexionslichtschranke gemäß Patentanspruch 2 lassen sich zusätzlich die Treffmomentfaktoren

4. Sweetspot Horizontal und
5. Horizontaler Eintreffwinkel $W_{io}$ bestimmen.

Eine weitere Zusatzeinrichtung mit einer weiteren Reflexionslichtschranke gemäß Patentanspruch 19 oder der Einsatz eines Messgeräts nach Patentanspruch 16 mit einer Reflektorgruppe nach Patentanspruch 5 ermöglicht dann auch die Messung des

6. Dynamischen Loft $W_{dl}$.

Mit der zusätzlichen Anbringung eines Radar-Transceivers gemäß Patentanspruch 21 können per Dopplerfrequenz-Messung zusätzlich

7. die Entwinkelungskennzahl, die erheblichen Einfluss auf die Schlägerkopfgeschwindigkeit hat und
8. der Verlauf der Schlägerkopfgeschwindigkeit im Abschwung vom Eintritt in den Radarstrahl, im Treffmoment selbst und bis zum Austritt aus dem Radarstrahl sowie
9. zum Zweck der Triggerung die Bewegungsrichtung des Schlägerkopfes in Verbindung mit einem Inphase/Quadrature phase-Mischer gemessen werden. Die zweite Messung der Schlägerkopfgeschwindigkeit im Treffmoment mittels Dopplerfrequenz-Messung wird gleichzeitig als unabhängige Kontrollmessung genutzt. Treten Messwertdifferenzen auf, wird der Schüler durch optische Signale oder verbal aufgefordert, seinen Golfschläger mit der daran angebrachten Reflektorgruppe mit Hilfe der Kalibrationsvorrichtung nach Anspruch 27 erneut zu kalibrieren.

Der Gegenstand der Erfindung ist insbesondere anwendbar in Golftrainingszentren. Der Golflehrer kann dem Schüler aufgrund der erzielten Messdaten wesentlich konkretere Trainingshinweise zur Verbesserung der Spielleistung des Schülers geben. Aber auch technisch interessierte Golfschüler, die sich mit dem "Warum" ihres nicht so gelungenen Schwungs auseinandersetzen, können die erfindungsgemäße Messvorrichtung als Trainingsgerät erwerben und auf der Driving Range Bälle abschlagen oder zu Hause den optimalen Golfschwung auch ohne Golfball üben. Der besondere Vorteil besteht in der hohen Lerneffizienz, denn die Messergebnisse liegen sofort nach Ausführung des Schwungs ohne Zeitverzögerung vor, in einem Moment, in dem der Schüler noch ein Feedback über seine Muskulatur erhält, wie sein Körpereinsatz abgelaufen ist.

Das Gerät ist auch ohne zusätzliche Hilfe leicht bedienbar. Spezielle Schalter, die auf den Schlägerkopf ansprechen, ermöglichen dem Schüler die Bedienung des Gerätes, ohne dass er sich zum PC oder Notebook begeben muss.

Ausführungsbeispiele der Erfindung werden anhand der Figuren 1 bis 18 erläutert und im Folgenden näher beschrieben. Es zeigen

Fig. 1    Eine Prinzipskizze der erfindungsgemäßen Messvorrichtung in einer ersten Ausführungsform für die Ermittlung der Treffmomentfaktoren Schlägerkopfgeschwindigkeit, Winkel offen/geschlossen $W_{og}$ und Sweetspot Vertikal.

Fig. 2    Einen Golfschläger mit einer Ausführungsform einer erfindungsgemäßen niedrig/breiten Reflektorgruppe in Vorderansicht, wobei die Reflektorgruppe in Ansprechposition senkrecht zum Abschlagboden am Golfschläger befestigt wurde.

Fig. 3      Einen Golfschläger mit der am Golfschläger parallel zum Schlägerschaft befestigten Reflektorgruppe gemäß Figur 2 in Seitenansicht.

Fig. 4      Eine Prinzipskizze der Impulsfolge bei der Ermittlung des Winkels offen/geschlossen $W_{og}$ bei einem Golfschwung mit einer niedrig/breiten Reflektorgruppe nach den Figuren 2 und/oder 3.

Fig. 5      Eine Prinzipskizze der Impulsfolge bei der Ermittlung der Sweetspot-Vertikal-Abweichung bei einem Golfschwung mit einer niedrig/breiten Reflektorgruppe nach den Figuren 2 und/oder 3.

Fig. 6      Eine Prinzipskizze der erfindungsgemäßen Messvorrichtung in einer zweiten Ausführungsform für die Ermittlung der Treffmomentfaktoren Sweetspot Horizontal und Horizontaler Eintreffwinkel $W_{io}$.

Fig. 7      Eine Prinzipskizze der Impulsfolge bei der Ermittlung der Sweetspot-Horizontal-Abweichung bei einem Golfschwung mit einer niedrig/breiten Reflektorgruppe nach den Figuren 2 und/oder 3.

Fig. 8      Eine Prinzipskizze der Impulsfolge bei der Ermittlung des Horizontalen Eintreffwinkels $W_{io}$ bei einem Golfschwung mit einer niedrig/breiten Reflektorgruppe nach den Figuren 2 und/oder 3.

Fig. 9      Eine Prinzipskizze der erfindungsgemäßen Messvorrichtung in einer weiteren Ausführungsform für die zusätzliche Ermittlung des Verlaufs der Schlägerkopfgeschwindigkeit im Abschwung, der Entwinkelungskennzahl und der Schlägerkopfgeschwindigkeit im Treffmoment.

Fig. 10      Eine Prinzipskizze der Impulsfolge bei der Ermittlung des Treffmomentfaktors Dynamischer Loft $W_{dl}$ in einer weiteren Ausführungsform bei einem Golfschwung mit einer niedrig/breiten Reflektorgruppe nach den Figuren 2 und/oder 3 mit einem verlängerten fünften Reflektor.

Fig. 11      Ein Golfschläger in einer weiteren Ausführungsform zur Messung des Treffmomentfaktors Dynamischer Loft $W_{dl}$ ohne Reflektorgruppe.

Fig. 12      Eine Prinzipskizze der erfindungsgemäßen Messvorrichtung in einer weiteren Ausführungsform für die exakte Ausrichtung des Golfballs.

Fig. 13      Prinzipskizze einer Messvorrichtung in einer weiteren Ausführungsform mit einer erfindungsgemäßen Kalibrationsvorrichtung.

Fig. 14      Prinzipskizze einer an einem Schlägerschaft eines Golfschlägers angeordneten erfindungsgemäßen hoch/schmalen Reflektorgruppe in einer Vorderansicht

Fig. 15      Prinzipskizze einer an einem Schlägerschaft eines Golfschlägers angeordneten erfindungsgemäßen hoch/schmalen Reflektorgruppe nach Fig. 14 in einer perspektivische Darstellung.

Fig. 16      Prinzipskizze einer an einem Schlägerschaft eines Golfschlägers angeordneten erfindungsgemäßen hoch/schmalen Reflektorgruppe nach den Figuren 14 und 15 in einer Seitenansicht

Fig. 17      Stark vereinfachte Prinzipskizze der erfindungsgemäßen Messvorrichtung in einer weiteren bevorzugten Ausführungsform zur Messung der Treffmomentfaktoren mit der erfindungsgemäßen hoch/schmalen Reflektorgruppe nach den Figuren 14, 15 und 16.

Fig. 18      Eine Prinzipskizze der erfindungsgemäßen Kalibrationsvorrichtung, angeordnet in der erfindungsgemäßen Messvorrichtung nach Fig. 13.

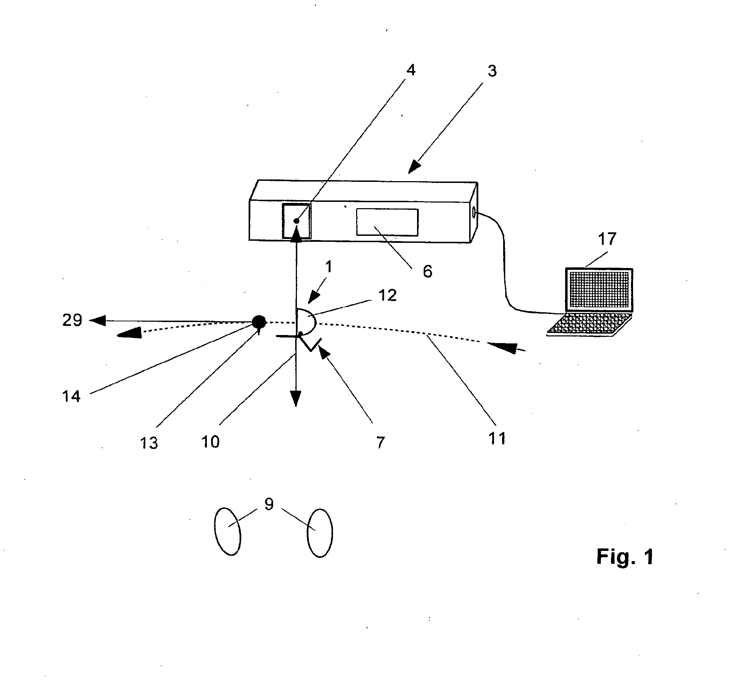

Die erfindungsgemäße Messvorrichtung nach Fig. 1 zur Messung von Treffmomentfaktoren eines Golfschlägers 1 besteht aus einem Messgerät 3 sowie einer am Golfschläger 1 befestigten Reflektorgruppe 7. Das Messgerät 3 ist dem Golfspieler 9 gegenüberliegend angeordnet und ist mindestens mit einer horizontal ausgerichteten Reflexionslichtschranke 4 und einer vorzugsweise in das Messgerät 3 integrierten Messdatenerfassungseinrichtung 6 ausgestattet. Die Reflexionslichtschranke 4 sendet einen Strahl 10 senkrecht zur Idealbahn 11 des Schlägerkopfes 12 im Bereich des Tees 13 und/oder Golfballs 14, wobei die Messdaten beim Durchschlagen des Strahls 10 mit der am Golfschläger 1 befestigten Reflektorgruppe 7 in Form von Impulsen an die Reflexionslichtschranke zurückgesendet, von der Messdatenerfassungseinrichtung 6 erfasst und an eine Auswerte-, Informationsausgabe- und Speichereinheit 17 weitergeleitet werden.

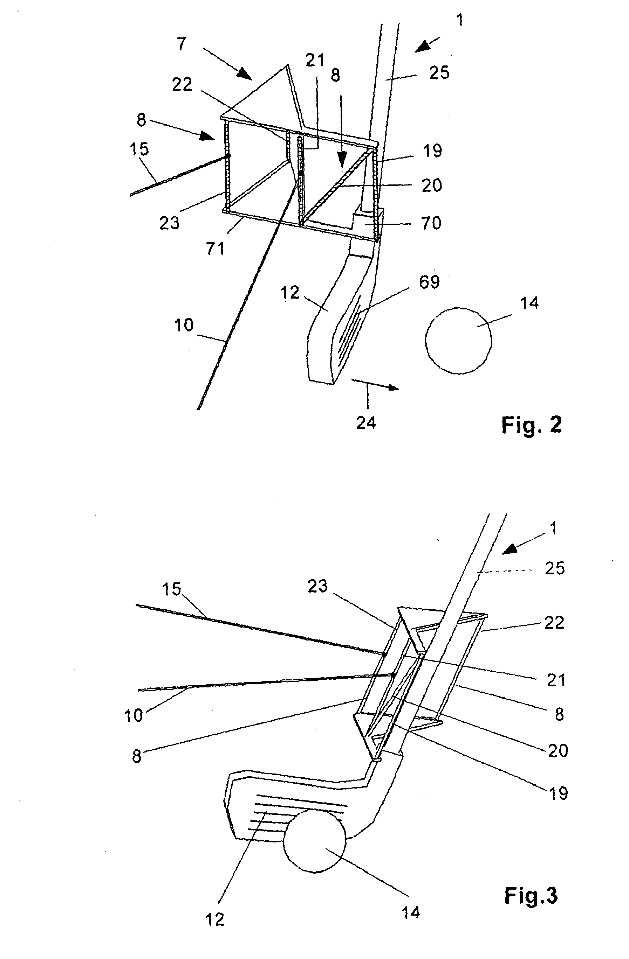

In Fig. 1 ist eine niedrig/breite Ausführungsform einer Reflektorgruppe 7 dargestellt, die nachfolgend anhand der Figuren 2 und 3 beschrieben wird.

Die niedrig/breite Reflektorgruppe 7, ist in einer Ausführungsform gemäß Fig. 2 am Golfschläger 1 oberhalb des Schlägerkopfes 12 so angebracht ist, dass die Reflektorgruppe 7 bei der Haltung des Golfschlägers 1 in Ansprechposition vertikal zum Abschlagboden 18 steht. Die sogenannte Ansprechposition nimmt der Golfspieler 9 unmittelbar vor Beginn eines jeden Golfschlages ein. Der Golfspieler 9 steht dabei mit gestreckten Armen und gespreizten Beinen in etwa mittig zum Golfball 14. Der Schlägerkopf 12 befindet sich dabei rechts vom Golfball 14, vom Golfspieler 9 aus gesehen. Der Schlägerschaft ist schräg zum Golfspieler hin geneigt. Mit diesem Neigungswinkel erreicht der Golfschläger 1 auch im Durchschwung den Golfball 14.

In einer Ausführungsform nach Fig. 3 ist die niedrig/breite Reflektorgruppe 7 parallel zum Schlägerschaft 25 des Golfschlägers ausgerichtet. Sie ist also auch in der Ansprechposition und während des Golfschwungs in ihrem oberen Bereich zum Golfspieler hin geneigt.

Wegen der einfacheren Befestigung am Golfschläger wurde die Ausführungsform nach Figur 3 den weiteren Ausführungen zugrunde gelegt.

Die erfindungsgemäße niedrig/breite Reflektorgruppe 7 nach Fig. 3 weist fünf Reflektoren 19, 20, 21, 22, 23 auf, wobei drei Reflektoren 19, 21, 23 senkrecht zu einer Unterkante 71 und parallel zueinander in einer Ebene und in einem genau definierten Abstand zueinander angeordnet sind und wobei der erste Reflektor 19 und der dritte Reflektor 21 durch den zweiten Reflektor 20 so miteinander verbunden sind, dass sie ein parallel verlaufendes "N" oder ein spiegelbildliches "N" bilden. Der vierte Reflektor 22 ist außerhalb der Ebene, jedoch parallel und vorzugsweise im gleichen Abstand zu dem dritten Reflektor 21 und dem fünften Reflektor 23 angeordnet, so dass bei Draufsicht auf die Reflektorgruppe ein Dreieck, in diesem Ausführungsbeispiel ein gleichschenkliges Dreieck, zwischen drittem Reflektor 21, viertem Reflektor 22 und fünftem Reflektor 23 erkennbar ist.

Die niedrig/breite Reflektorgruppe 7 ist an einem Golfschläger 1 mittels einer lösbaren, festsitzenden Klemmverbindung am Schlägerschaft befestigt und sorgt dafür, dass sich die Reflektorgruppe während des bis zu 200 oder sogar 230 km/h schnellen Schwungs nicht lockern und/oder verdrehen kann.

Die Reflektoren 19, 20, 21, 22, 23 bestehen aus retroreflektierenden Flächen 8, die streifenförmig ausgebildet sind und weisen mindestens die gleiche, besser die doppelte Breite auf, wie der Durchmesser des Strahls 10. Allen von der Reflexionslichtschranke 4 gemessenen Zeiten wird die Mitte des jeweiligen Reflex-Impulses zugrunde gelegt. Die einzelnen Reflektoren 19, 20, 21, 22, 23 werden durch einen stabilen, nicht reflektierenden Rahmen in der jeweiligen Position gehalten oder auf den Rahmen aufgeklebt oder mit diesem in anderer Weise verbunden und bilden mit diesem die niedrig/breite Reflektorgruppe 7.

Die Reflexionslichtschranke 4, vorzugsweise eine hochfrequente Laser-Reflexionslichtschranke, ist mit einem Sender und einem Empfänger ausgestattet. Bei einem Idealschwung trifft der Strahl 10 (Laserstrahl) des Senders vorzugsweise mittig auf die durchschwingende niedrig/breite Reflektorgruppe 7 und passiert den fünften Reflektor 23 unmittelbar vor dem Treffpunkt 2. Jeder Reflektor 19, 20, 21, 22, 23 sendet beim Durchschlagen des Strahls 10 einen Impuls an den Empfänger der Reflexionslichtschranke 4 zurück. Diese Impulse werden als zeitliches Muster ausgelesen und an die Messdatenerfassungseinheit, die eine Soundkarte oder eine Mehrkanaleinheit sein kann, weitergeleitet. Von dort werden die Messdaten an eine Auswerte-, Informationsausgabe- und Speichereinheit 17 weitergeleitet, gespeichert und dem Golfspieler 9 in Sekundenschnelle als Messergebnis angezeigt.

Der Golfball 14 muss in einer solchen Entfernung vom Strahl 10 angeordnet sein, dass sein Treffpunkt 2 erst erreicht wird, wenn alle fünf Reflektoren den Strahl 10 passiert haben, denn im Treffmoment selbst käme es sonst zu einer Geschwindigkeitsreduzierung und evtl. zu einem Verkanten des Schlägerkopfes 12 und damit auch der Reflektorgruppe 7. Auch muss der Golfball 14 gegenüber dem Messgerät eine ganz exakt definierte Position einnehmen, die im ersten Ausführungsbeispiel vorzugsweise mit einer Schablone festgelegt wird hinsichtlich des Abstandes vom Messgerät, des Abstandes vom Strahl 10 sowie Höhe des Tees 13 vom Abschlagboden 18.

Mit der Messvorrichtung nach Fig. 1 und der niedrig/breiten Reflektorgruppe 7 nach Fig. 1 und/oder 2 können die Treffmomentfaktoren

    a) Schlägerkopfgeschwindigkeit V,
    b) Schlagflächenstellung als Winkel offen/geschlossen $W_{og}$ und
    c) Sweetspot Vertikal gemessen werden. Die Messvorrichtung nutzt dabei die Tatsache, dass der Schlägerkopf 12 kurz vor dem Treffpunkt 2 nur noch eine geringe Beschleunigung tangential zu seiner Schwungbahn erfährt. Somit kann die niedrig/breite Reflektorgruppe 7 als räumliches optisches Muster, das sich parallel zum Schlägerkopf 12 bewegt, mit Lichtschranken als zeitliches Muster ausgelesen werden.

Der Treffmomentfaktor Schlägerkopfgeschwindigkeit V wird durch die erste Reflexionslichtschranke 4 aus der Zeit bzw. der Zeitdifferenz zwischen den Impulsen des ersten Reflektors 19 und des fünften Reflektors 23 sowie dem Abstand dieser Reflektoren 19, 23 voneinander als mittlere Geschwindigkeit bei der Passage des Strahls 10 ermittelt. Die Winkel offen/geschlossen $W_{og}$ sowie horizontaler Eintreffwinkel In to Out /Out to In ($W_{io}$) gehen mit dem Cosinus in die Berechnung ein und können gegebenenfalls kompensiert werden.

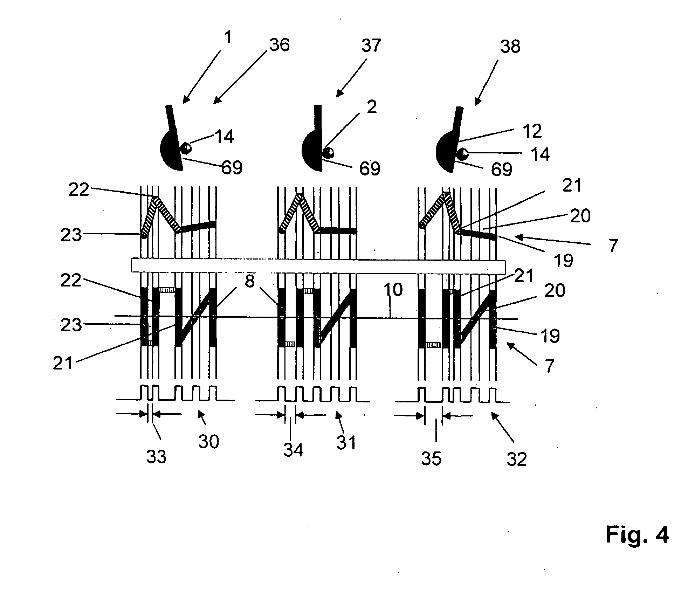

In Fig. 4 ist das Prinzip der Ermittlung der Schlagflächenstellung 36, 37, 38 als Winkel offen/geschlossen $W_{og}$ dargestellt.

Der $W_{og}$, der an der ersten Reflexionslichtschranke 4 ermittelt wird, gibt den Winkel an, um den das Schlägerblatt 69 nach links oder rechts im Treffpunkt 2 verdreht ist. Bei idealer Schlagflächenstellung 37 fliegt der Golfball 14 gerade zum Ziel. Das Zeitmuster 31 zeigt, dass die Signale, die von den Reflektoren drei, vier und fünf 21,22, 23 ausgehen, gleich groß voneinander beabstandet sind.

Beim Verdrehen nach links trifft das Schlägerblatt 69 die rechte Außenseite des Golfballs 14. Der Schlag geht Out to In, der Golfball 14 startet nach links und dreht im Verlauf des Fluges weiter nach links ab. Fig. 4 zeigt in einer Draufsicht auf die Reflektorgruppe 7, dass die Ebene der Reflektorgruppe 7 ebenfalls nach links verdreht ist, es liegt eine geschlossene Schlagflächenstellung 36 vor. Die Vorderansicht auf die Reflektorgruppe 7 und das darunter befindliche Zeitmuster 30 zeigen, dass der auf die Zeit bezogene Abstand 33 zwischen dem Impuls des vierten Reflektors 22 und dem Impuls des fünften Reflektors 23 kleiner ist als beim Zeitmuster 31.

Bei offener Schlagflächenstellung 38 ist aus der Vorderansicht der Reflektorgruppe 7 und dem dazugehörigen Zeitmuster 32 ersichtlich, dass der Zeitabstand 35 zwischen dem vierten und dem fünften Reflektor 22, 23 größer ist als bei der idealen Schlagflächenstellung 37.

Die Ermittlung des Sweetspot SSP ist insofern problematisch, als der tatsächliche Sweetspot von Schläger zu Schläger unterschiedlich sein kann. Bei dem angewendeten Messverfahren wurde davon ausgegangen, dass sich der Sweetspot, wie allgemein üblich, im Kreuzungspunkt der Diagonalen durch das Schlägerblatt 69 befindet. Im Zweifelsfalle muss der tatsächliche Sweetspot jedoch beim Hersteller erfragt und bei der Ausrichtung des Golfballs 14 berücksichtigt werden.

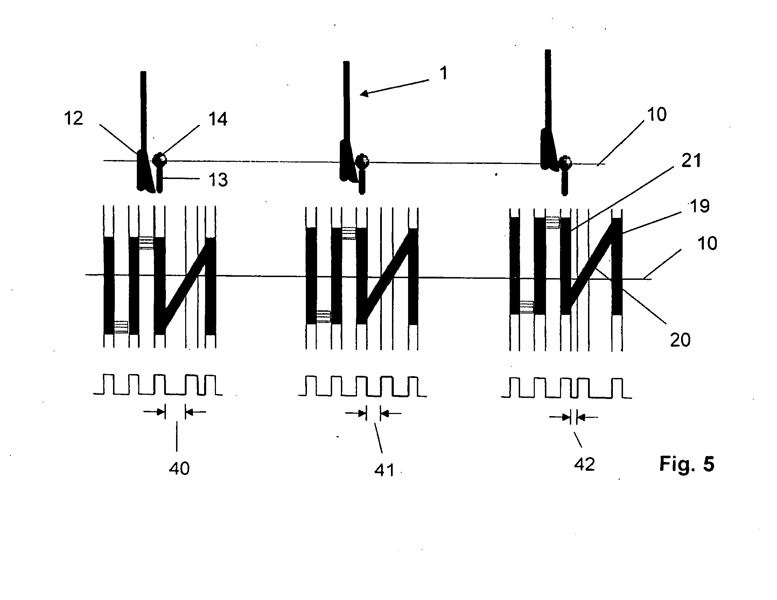

Durch das erfindungsgemäße Messverfahren wird der exakte Auftreffpunkt des Golfballs 14 auf dem Schlägerblatt 69 bestimmt. Das bedeutet, dass nicht der Sweetspot direkt sondern die Abweichung vom theoretischen Sweetspot ermittelt und angezeigt wird. Die Ermittlung der Sweetspot-Vertikal-Abweichung ist in Figur 5 dargestellt. Die Sweetspot-Vertikal-Abweichung wird hier aus dem relativen Zeitabstand der Impulse zwischen dem ersten Reflektor 19 und dem zweiten Reflektor 20 sowie dem zweiten Reflektor 20 und dem dritten Reflektor 21 durch den Strahl 10 der Reflexionslichtschranke 4 bestimmt. Der Zeitabstand 41 der Impulse bei Schlägen, die den Vertikalen Sweetspot exakt treffen, ist völlig gleich. Der Zeitabstand 40 der Impulse bei zu tief geführten Schlägen ist dagegen zwischen dem zweiten Reflektor 20 und dem dritten Reflektor 21 größer, bei zu hoch geführten Schlägen ist der Zeitabstand 42 der Impulse geringer.

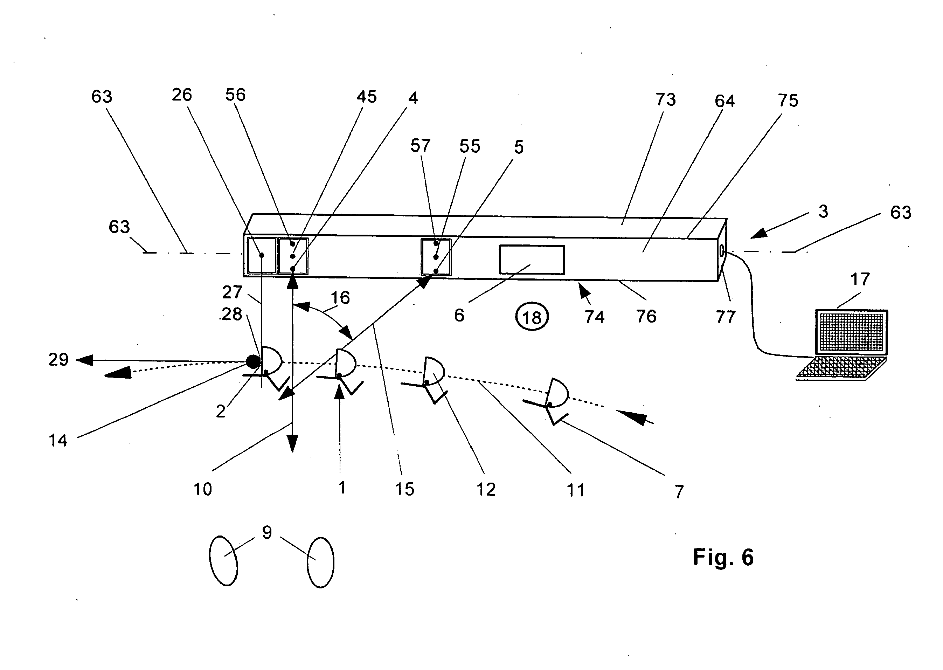

Um die Ausrichtung des Golfballes zu erleichtern, wurde in einem weiteren Ausführungsbeispiel gemäß Fig. 6 ein zusätzlicher optischer Linienlaser 26 links von der Refexionslichtschranke 4 angebracht, der in einem Winkel von 90° auf den Golfball'14 so ausgerichtet ist, dass dessen Strahl 27 auf die der Ballflugrichtung 29 abgewandte Außenfläche 28 des Golfballs 14 trifft, wobei die Außenfläche 28 gleichzeitig den idealen Treffpunkt 2 für den Schlägerkopf 12 bildet. Bei einem Linienlaser wird der eigentlich punktförmige Laserstrahl durch eine optische Linse oder ein Beugungsgitter in einen linienförmigen Strahl 27 umgewandelt. Es liegt jedoch im Rahmen der Erfindung hierfür auch herkömmliche Laser einzusetzen.

Um auch die erfindungsgemäße Messvorrichtung für die Messung des Sweetspot Horizontal und den Horizontalen Eintreffwinkel $W_{io}$ zu nutzen, wurde das Messgerät 3 gemäß Fig.6 mit einer zweiten Reflexionslichtschranke 5 ausgestattet, wobei die zweite Reflexionslichtschranke 5 mit ihrem ebenfalls horizontal ausgerichteten Strahl 15 in einem definierten spitzen Winkel 16 den Strahl 10 der ersten Reflexionslichtschranke 4 kreuzt, wobei der Kreuzungspunkt der beiden Strahlen 10, 15 wenige Zentimeter hinter der Idealbahn 11 liegt. Bei Verwendung einer Soundkarte als Messdatenerfassungseinrichtung 6 muss der Abstand des Strahls 15 vom Strahl 10 etwas größer sein als die Länge der Reflektorgruppe 7, damit sich die Impulse nicht überlagern. In diesem Falle treffen die Strahlen 10,15 zeitlich versetzt auf die retroreflektierenden Flächen 8. Bei Verwendung einer Mehrkanalerfassungs- und Verarbeitungseinheit als Messdatenerfassungseinrichtung 6 können sich Strahl 10 und Strahl 15 auf der Idealbahn 11 kreuzen. Der spitze Winkel 16 zwischen dem Kreuzungspunkt der Strahlen 10, 15 beträgt vorzugsweise 45°. In diesem Falle treffen die Strahlen 10, 15 zeitgleich auf die Reflektoren 19, 20, 21, 22, 23.

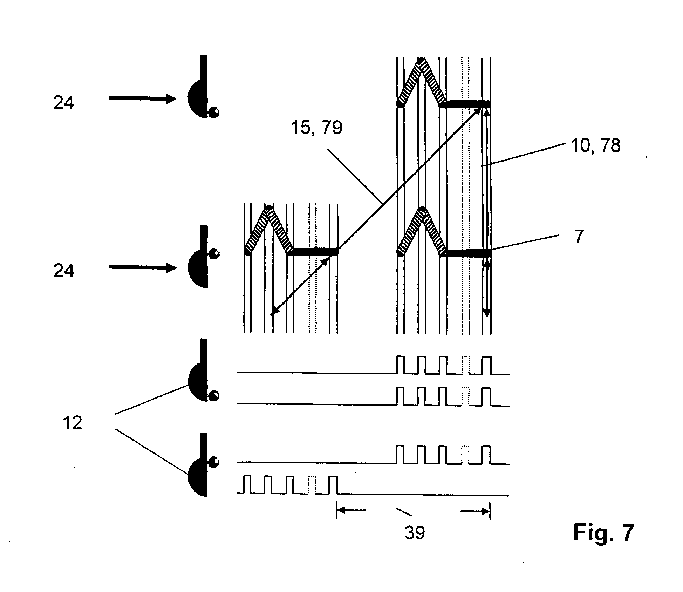

In Fig. 7 ist die Prinzipskizze des Messverfahrens zur Ermittlung der Sweetspot-Horizontal-Abweichung dargestellt. Der exakte horizontale Auftreffpunkt des Golfballs 14 auf dem Schlägerblatt 69 ergibt sich aus dem Abstand 39 der Impulse zwischen den Reflexionsimpulsen des Strahls 10 und des Strahls 15 jeweils am ersten Reflektor 19 in Abhängigkeit von der Zeit.

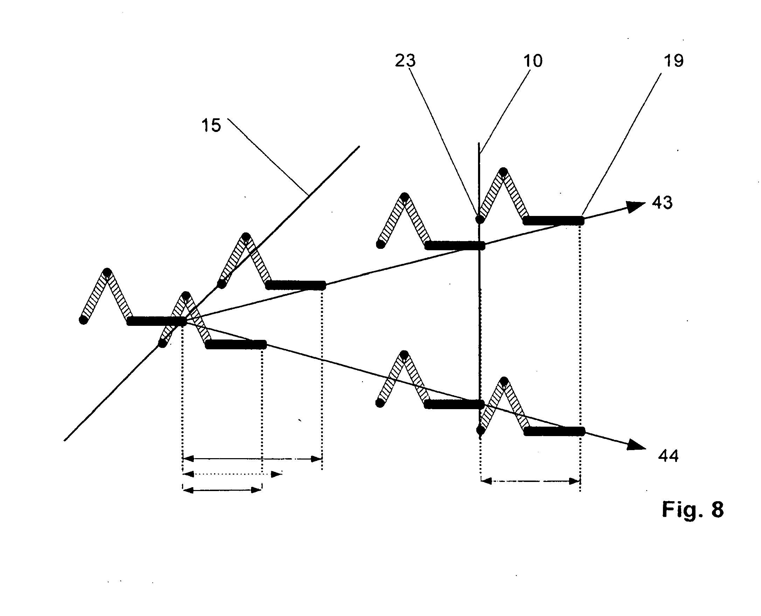

Fig.8 verdeutlicht das Messverfahren zur Ermittlung des Treffmomentfaktors Horizontaler Eintreffwinkel $W_{io}$. Zur Vereinfachung der Darstellung wurde angenommen, dass der Winkel offen/geschlossen $W_{og}$ gleich 0° und der horizontale Winkel zwischen der Bahn des Reflektors 7 auf der Schlaglinie Out to In 43 und der Ideallinie 11 15° beträgt. Ebenso verläuft die Schlaglinie In to Out zur Ideallinie 11 in Figur 8 in einem Winkel von 15°. Bestimmt wird der Horizontale Eintreffwinkel $W_{io}$ aus dem relativen Zeitabstand zwischen den Reflexionen am ersten Reflektor 19 und fünften Reflektor 23 jeweils an der ersten Reflexionslichtschranke 4 durch den Strahl 10 sowie am ersten Reflektor 19 und fünften Reflektor 23 jeweils an der zweiten Reflexionslichtschranke 5 durch den Strahl 15. Abhängig vom Horizontalen Eintreffwinkel $W_{io}$ verkürzt sich die Impulsfolge am Strahl 15 der Reflexionslichtschranke 5 bei Schlaglinie In to Out 44 im Vergleich zur Impulsfolge am Strahl 10 der Reflexionslichtschranke 4 oder verlängert sich bei Schlaglinie Out to In 43. Dieser Effekt ist durch Einflüsse des $W_{og}$ überlagert, die sich jedoch rechnerisch kompensieren lassen.

Wenn eine aufwändige manuelle Justierung der Reflektorgruppe 7 am Golfschläger 1 in Bezug auf den Abstand der Unterkante 71 der Reflektorgruppe 7 vom Abschlagboden 18 vermieden werden soll, ist es ratsam, stets den gleichen Bezugspunkt für die lösbare Befestigung der Reflektorgruppe 7 am Golfschläger 1 auszuwählen, nämlich den Übergangsbereich 70 des Schlägerkopfes 12 zum Schlägerschaft 25 für die Unterkante 71. Diese kann jedoch bei Drivern, Hölzern und Eisen und auch bei verschiedenen Herstellern sehr unterschiedlich sein.

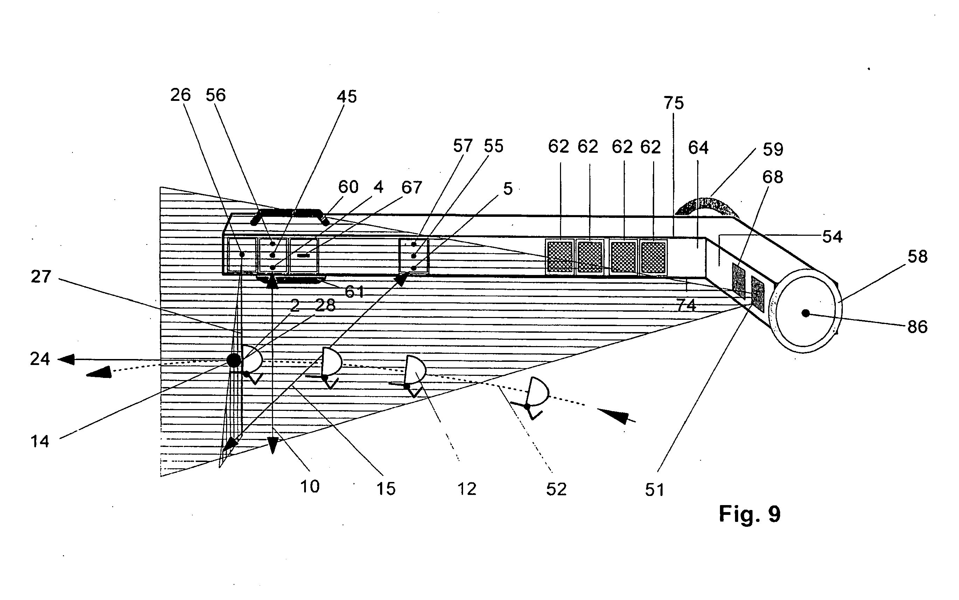

Es ist daher in einer weiteren Ausführungsform der Erfindung gemäß den Figuren 6 und 9 zusätzlich oberhalb der ersten Reflexionslichtschranke 4 eine dritte Reflexionslichtschranke 45 und oberhalb der zweiten Reflexionslichtschranke 5 eine vierte Reflexionslichtschranke 55 angebracht, die in diesem Ausführungsbeispiel exakt mittig zwischen Oberkante 75 und Unterkante 74 in der Frontseitenwand 64 angeordnet sind. Die ersten beiden Reflexionslichtschranken 4, 5 können dann vorzugsweise für Eisen und Hölzer mit kurzen Übergangsbereichen 70 Verwendung finden. Auf die zusätzlichen Reflexionslichtschranken 45, 55 wird umgeschaltet, wenn insbesondere Driver mit großen Schlägerköpfen und entsprechend großen Übergangsbereichen zum Einsatz kommen. Der Strahl 78 der dritten Reflexionslichtschranke 45 verläuft ebenfalls horizontal und senkrecht zur Idealbahn 11 des Schlägerkopfes 12 wie der Strahl 10, und der Strahl 79 der vierten Reflexionslichtschranke verläuft ebenfalls im gleichen spitzen Winkel 16 wie der Strahl 15.

Es ist vorteilhaft, die Reflektorgruppe 7 am Schlägerschaft 25 unmittelbar oberhalb des Schlägerkopfes 12, vorzugsweise mit einem Sprengring oder einer anderen lösbaren, festsitzenden Klemmverbindung zu befestigen. Als vorteilhaft hinsichtlich Stabilität und Verletzungsgefahr hat sich auch erwiesen, die Reflektorgruppe 7 vorzugsweise mittig, also am dritten Reflektor 21 am Schlägerschaft 25 zu befestigen.

Die Figuren 6 und 9 zeigen weiterhin ein Ausführungsbeispiel, bei dem das Messgerät 3 sowohl für Rechts- als auch Linkshänder einsetzbar ist. Hierzu wurde eine fünfte Reflexionslichtschranke 56 spiegelbildlich zur ersten Reflexionslichtschranke 4 oberhalb der dritten Reflexionslichtschranke 45 angeordnete, welche beispielsweise die Funktion der ersten Reflexionslichtschranke 4 im Linkshänderbetrieb übernimmt. Eine weitere spiegelbildlich angeordnete sechste Reflexionslichtschranke 57 mit einem Strahl 66 oberhalb der vierten Reflexionslichtschranke 55 übernimmt die Funktion der zweiten Reflexionslichtschranke 5. Ein integrierter Lagesensor sorgt dafür, dass beispielsweise die spiegelbildlich angeordnete fünfte Reflexionslichtschranke 56 die Funktion der ersten Reflexionslichtschranke 4 und die spiegelbildlich angeordnete sechste Reflexionslichtschranke 57 die Funktion der zweiten Reflexionslichtschranke 5 übernimmt. Der Abstand der Reflexionslichtschranken 4, 45, 56 bzw. 5, 55, 57 untereinander beträgt in diesem Ausführungsbeispiel jeweils 3 cm.

Wenn die fünfte Reflexionslichtschranke 56 und die sechste Reflexionslichtschranke 57 zur Messung des Treffmomentfaktors Dynamischer Loft $W_{dl}$ eingesetzt wird, sollte der Abstand der übereinander angeordneten ersten Reflexionslichtschranke 4 von der fünften Reflexionslichtschranke 56 in der ersten Reflexionslichtschrankengruppe 4, 45, 56 sowie der Abstand der zweiten Reflexionslichtschranke 5 von der sechsten Reflexionslichtschranke 57 in der zweiten Reflexionslichtschrankengruppe 5, 55, 57 mindestens 7 cm betragen.

Es liegt im Bereich der Erfindung, weitere Reflexionslichtschranken zur weiteren Erhöhung der Präzision der Messung anzubringen. Rechts- und Linkshänderbetrieb kann grundsätzlich aber auch nur mit den Reflexionslichtschranken 4 und 5 betrieben werden, wenn diese mittig zwischen der Oberkante 75 und der Unterkante 76 der Frontseitenwand 64 des Messgeräts 3 angeordnet sind. Auch ist Rechts- und Linkshänderbetrieb mit vier Reflexionslichtschranken möglich, wenn der Abstand von der Oberkante 75 und der Unterkante 76 bei allen Reflexionslichtschranken 4, 5, 45, 55 gleich groß ist. Mit einer höheren Anzahl Reflexionslichtschranken kann jedoch die Anpassbarkeit an die Höhe der Reflektorgruppe 7 weiter erhöht werden.

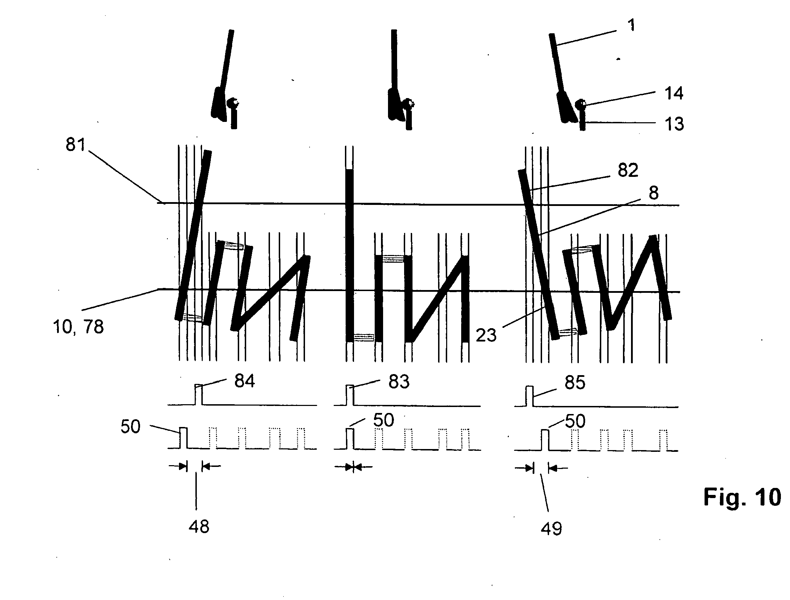

Soll mit der erfindungsgemäßen Messvorrichtung auch der Dynamische Loft $W_{dl}$ ermittelt werden, der angibt, ob sich das Griffende 80 des Golfschlägers 1 im Treffpunkt 2 vor oder hinter dem Schlägerblatt 69 befindet, so ist eine weitere siebente Reflexionslichtschranke (nicht dargestellt) mit einem Strahl 81 oberhalb der Reflexionslichtschranken 4, 45,bzw. 56 erforderlich. Da der Strahl 81 vorzugsweise etwa 30 cm oberhalb des Strahls 78 der dritten Reflexionslichtschranke 45 verlaufen sollte, ist es erforderlich, wie in Fig. 10 dargestellt, einen der Reflektoren 19, 21, 23 mit einer Reflektorstabverlängerung 82 auszustatten. Gemessen wird mit einer der Reflexionsschranken 4, 45 oder 56 sowie der siebenten Reflexionslichtschranke. Liegt das Griffende 80 im Treffpunkt 2 über dem Schlägerblatt 69, wurde der Treffpunkt 2 ideal getroffen. Der Impuls 50 der ersten Reflexionslichtschranke 4 bzw. der dritten Reflexionslichtschranke 45 erfolgt zu exakt dem selben Zeitpunkt wie der Impuls 83, der durch den Strahl 81 der siebenten Reflexionslichtschranke ausgelöst wurde.

Ist das Griffende 80 im Treffpunkt 2 vor dem Golfball 14, so wird der Impuls 84 durch den Strahl 81 gegenüber dem Impuls 50 um den Zeitabstand 48 früher gesendet. Ist das Griffende 80 im Treffpunkt 2 hinter dem Golfball 14, so wird der Impuls 85 durch den Strahl 81 gegenüber dem Impuls 50 um den Zeitabstand 49 später gesendet.

Der Schlägerkopf 12 befindet sich dem Treffpunkt 2 am nächsten, wenn die Reflektorstabverlängerung 82 am fünften Reflektor 23 angebracht ist. Ist sie an einem der anderen Reflektoren 19, 21 angebracht, muss ein Korrekturfaktor in den angegebenen Wert eingerechnet werden.

Alternativ kann anstelle einer Reflektorstabverlängerung 82 auch eine retroreflektierende Fläche 8 oberhalb der Reflektorgruppe 7 direkt auf dem Schlägerschaft 25 angebracht werden.

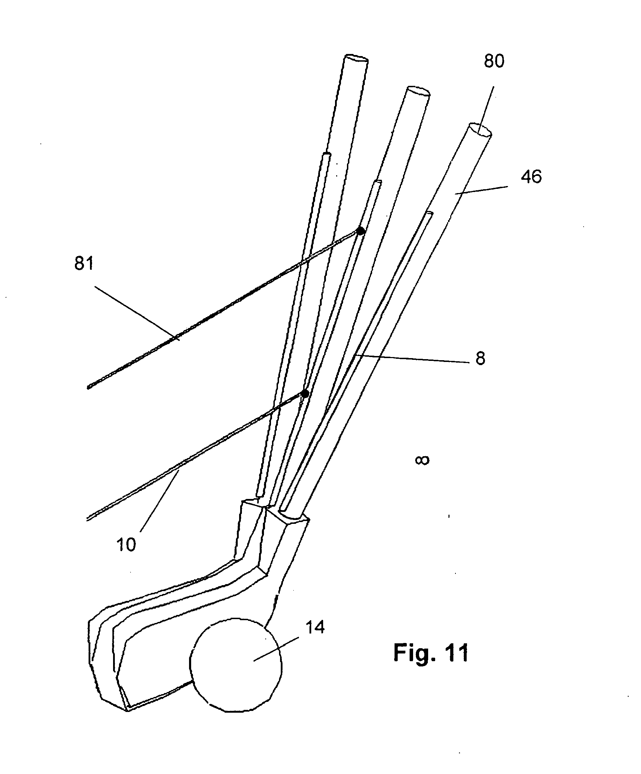

Soll ausschließlich der Dynamische Loft $W_{dl}$ als einziger Treffmomentfaktor gemessen werden, kann die Messung, wie in Fig. 11 dargestellt, auch ganz ohne Reflektorgruppe 7 durchgeführt werden, indem die retroreflektiernde Fläche 8 direkt auf den Schlägerschaft 25 aufgebracht wird.

Die siebente Reflexionslichtschranke (nicht dargestellt) kann über einen Klappmechanismus zum Einsatz kommen, der in der Deckenwand 73 und/oder der Unterseite 74 des Messgeräts 3 verborgen ist. Alternativ kann die siebente Reflexionslichtschranke (nicht dargestellt) auch als Zusatzteil über eine Steckverbindung (nicht dargestellt) aufgesetzt werden.

Alle verwendeten Reflexionslichtschranken 4, 5, 45, 55, 56, 57 sind vorzugsweise schnell ansprechende Laser-Reflexionslichtschranken und ihre Strahlen 10, 15, 78, 79, 65, 66, 81 hochfrequent amplitudenmodulierte gepulste Laserlichtstrahlen, vorzugsweise Laserstrahlen. Je hochfrequenter die Laserstrahlen sind, um so präziser ist die Messgenauigkeit.

In einer weiteren Ausführungsform nach Fig. 9 ist das Messgerät 3 L-förmig gestaltet. In der Vorderseite der Querseitenwand 54 ist ein Radar-Transceiver 51 horizontal in Richtung Golfball 14 und/oder Tee 13 ausgerichtet, der im Zusammenwirken mit der ersten Reflexionslichtschranke 4 und vorzugsweise dem ersten Reflektor 19 und fünften Reflektor 23 zusätzlich den Treffmomentfaktor Schlägerkopfgeschwindigkeit alternativ misst. Beide Messergebnisse werden miteinander verglichen. Beim Auftreten geringer Differenzen werden Korrekturen vom Programm durchgeführt, und bei größeren Abweichungen wird der Golfspieler 9 zur Kalibrierung des Golfschlägers 1 und der dazugehörigen Reflektorgruppe 7 aufgefordert, wobei eine einfach zu bedienende Kalibrierungsvorrichtung direkt am Messgerät angebracht ist.

Der Radar-Transceiver 51 ist vorzugsweise ein Radar-Hochgeschwindigkeits-Transceiver (24 GHz-Band), der per Dopplerfrequenzmessung die Schlägerkopfgeschwindigkeit als Funktion der Zeit erfasst, während der Schlägerkopf 12 sich im Bereich des Radarstrahls 53 bzw. der Radarkeule aufhält. Durch Integration dieses Geschwindigkeitsverlaufs mit dem Zeitbezug zu den Impulsen der ersten Reflexionslichtschrankengruppe 4, 45, 56 kann der Verlauf der Schlägerkopfgeschwindigkeit als Funktion der Schlägerkopfposition berechnet werden.

Sämtliche Messungen der erfindungsgemäßen Messvorrichtung werden ausgelöst, wenn eine der Reflexionslichtschranken 4, 5, 45, 55, 56, 57 anspricht. Das könnte bespielsweise durch das sogenannte "Waggerln" erfolgen. Dabei schwingt der Golfspieler 9 den Schläger vor dem Golfball 14 leicht hin und her, um sich aufzulockern und die richtige Schlagposition zu finden. Da diese Bewegungen jedoch bei einer Schlägerkopfgeschwindigkeit <15 km/h erfolgen, der erste gemessene Schlag jedoch ein sogenannter Chip (kurzer Schlag), der bei 20-40 km/h ausgeführt wird, sein soll, wird bei der erfindungsgemäßen Lösung das Doppler-Radar-Signal in kurzen Abständen von beispielsweise 5 ms mittel Fourier-Analyse auf die vorkommenden Frequenzen untersucht und somit Schlägerkopfgeschwindigkeit und Bewegungsrichtung bestimmt. Dazu wird das Messgerät 3 mit einem Mikroprozessor oder einem Signalprozessor (DSP) zur Triggerung des eigentlichen Messvorgangs ausgestattet. Der Radar-Hochgeschwindigkeits-Transceiver 51 erkennt per Doppler-Radar mit einem Inphase/Quadrature phase-Mischer die pendelnden Bewegungen des Golfschlägers 1 in der Vorbereitungsphase des Golfschwungs sowie die Bewegungsrichtung und startet den Messvorgang erst ab einer festgelegten Geschwindigkeit im eigentlichen Durchschwung.

Es liegt im Rahmen der Erfindung, dass diese Berechnungen anstatt mit einem Mikroprozessor auch in der Auswerte-, Informationsausgabe- und Speichereinheit 17 erfolgen können.

In der Ausführung nach Fig. 9 ist das Messgerät 3 mit Rädern 58, 59 an seiner Querachse 86 und mit je einem Griff 60, 61 oberhalb und unterhalb der Längsachse 63 im Bereich des optischen Linienlasers 26 versehen. Die Griffe dienen gleichzeitig als Standbeine für das Messgerät 3 in Rechts- und Linkshänderfunktion, wobei Griffhöhe und Raddurchmesser für eine waagerechte Lage des Messgeräts 3 sorgen.

Durch Hochheben am Griff 60, Drehen über die Räder 58, 59 und Ablegen auf dem Griff 60 kann das Messgerät 3 zu einem Gerät für Linkshänder umgewandelt werden, wobei vorzugsweise eine zusätzliche fünfte Reflexionslichtschranke 56 und eine zusätzliche sechste Reflexionslichtschranke 57 die Funktionen der ersten Reflexionslichtschranke 4 und der zweiten Reflexionslichtschranke 5 übernehmen. Es liegt im Bereich der Erfindung, dass die Auswerte-, Informationsausgabe- und Speichereinheit 17, beispielsweise ein Notebook, oder eine in die Querachse 54 integrierte Batterie das Messgerät mit Strom versorgt, wenn kein externer Stromanschluss verfügbar ist.

Die Ausführungsform nach Fig. 9 enthält zusätzlich diverse mit dem Schlägerkopf bedienbare, z.B. optisch oder kapazitiv auslösende Schalter 62 in der Frontseitenwand 64 des Messgeräts 3, die beispielsweise das Starten oder Zurücksetzen eines Programms mit dem Schläger ermöglichen, ohne dass der Spieler 9 dazu den PC oder das Notebook 17 händisch bedienen oder sich bücken muss.

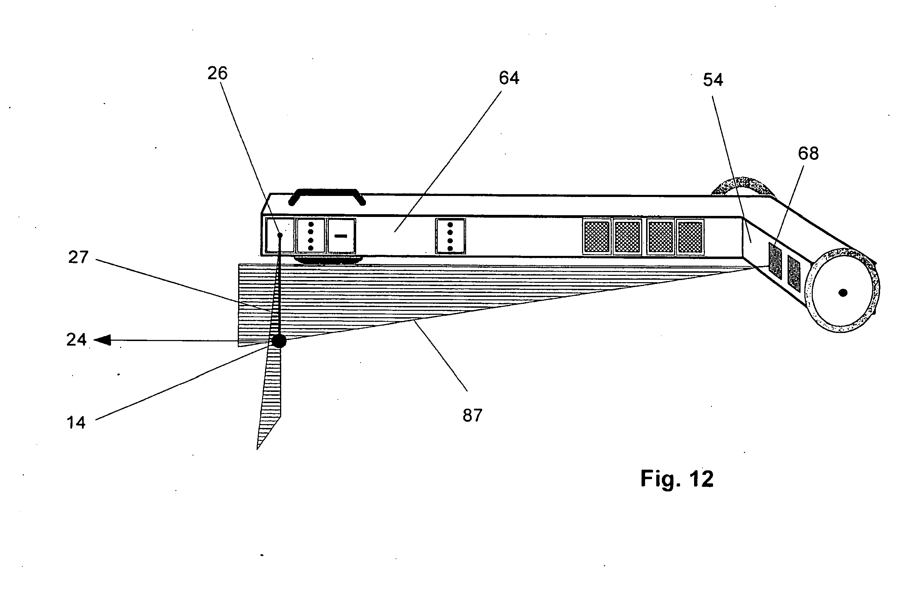

In einem weiteren Ausführungsbeispiel nach Fig. 12 ist ausgeführt, wie eine exakte Ausrichtung des Golfballes 14 bzw. des Tees 13 in der Längen- und Breitenausrichtung erfolgen kann. Hierzu wurde in die Querseitenwand 54 ein zusätzlicher zweiter optischer Linienlaser 68 eingebracht. Dieser sendet einen linienförmigen Strahl 87 in einem Winkel ≤ 45°zum Golfball 14. Sobald sich der Strahl 27 des optischen Linienlaser 26 mit dem Strahl 87 auf dem Golfball 14 kreuzt, ist der Golfball 14 richtig ausgerichtet. Diese Art der Ausrichtung ist exakter und schneller als eine Ausrichtung an der Außenfläche 28 des Golfballs 14 mit nur einem optischen Linienlaser 26 und einer metrischen Messvorrichtung. Muss der Golfball auch in der Höhe ausgerichtet werden, weil kein genormtes Tee, z. B. in einer Abschlagmatte auf der Driving Range zur Verfügung steht, ist es vorteilhaft, einen der beiden optischen Linienlaser durch einen Mehrfachlinienlaser zu ersetzen.

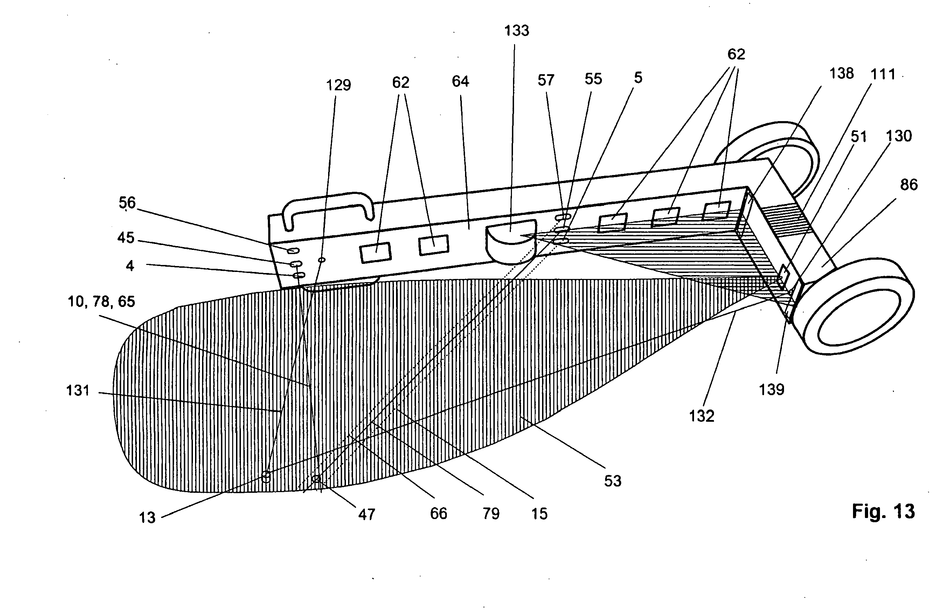

Im Ausführungsbeispiel nach Fig. 13 wird eine Messvorrichtung dargestellt, bei der das Tee 13 vor die Messvorrichtung 3 verlegt wurde. Das gibt dem Golfspieler mehr Freiraum bei der Ausführung seines Golfschwungs. Dabei sind zur exakten elektronischen Ausrichtung des Messgeräts 3 in der Frontseitenwand 64 und in der Vorderseite der Querseitenwand 54 zusätzlich je ein Laser 129, 130 zum justieren angeordnet. Ihre Strahlen 131, 132 treffen auf einer über das Tee 13 gestülpten Schablone, auf der eine kalibrierte Linie festgelegt ist, aufeinander, sobald sich das Messgerät in der für die exakte Ausführung der Messungen erforderlichen Position befindet. Die Reflexionslichtschranken der ersten Reflexionslichtschrankengruppe 4, 45, 56 sind auch bei dieser Ausführungsform in einem Winkel von 90° in der Frontseitenwand 64 angeordnet und ihre horizontal zum Abschlagboden 18 und parallel zueinander verlaufenden Strahlen 10, 78, 65 sind auf die Reflektorgruppe 7, 7a oberhalb eines Abschlagpunktes 47 für das Golf spielen ohne Golfball ausgerichtet.

Die Reflexionslichtschranken der zweiten Reflexionslichtschrankengruppe 5, 55, 57 sind vorzugsweise in einem Winkel von 45° in der Frontseitenwand 64 angeordnet und ihre horizontal zum Abschlagboden 18 und parallel zueinander verlaufenden Strahlen 15, 79, 66 kreuzen die Strahlen 10, 78, 65 der ersten Reflexionslichtschrankengruppe 4, 45, 56 maximal 10 cm hinter dem Abschlagpunkt 47 und hinter der Idealbahn 11.

Das Tee 13 ist vom rechtshändigen Golfspieler 9 aus gesehen links vom potentiellen Abschlagpunkt 47 in einem Abstand, der mindestens der halben Breite der Reflektorgruppe 7, 7a entspricht, angeordnet und der Schlägerkopf 12 trifft auf den auf dem Tee 13 liegenden Golfball 14, unmittelbar nachdem die Reflektorgruppe 7, 7a den Bereich der Strahlen 10, 78, 65 der ersten Reflexionslichtschrankengruppe 4, 45, 56 verlassen hat.

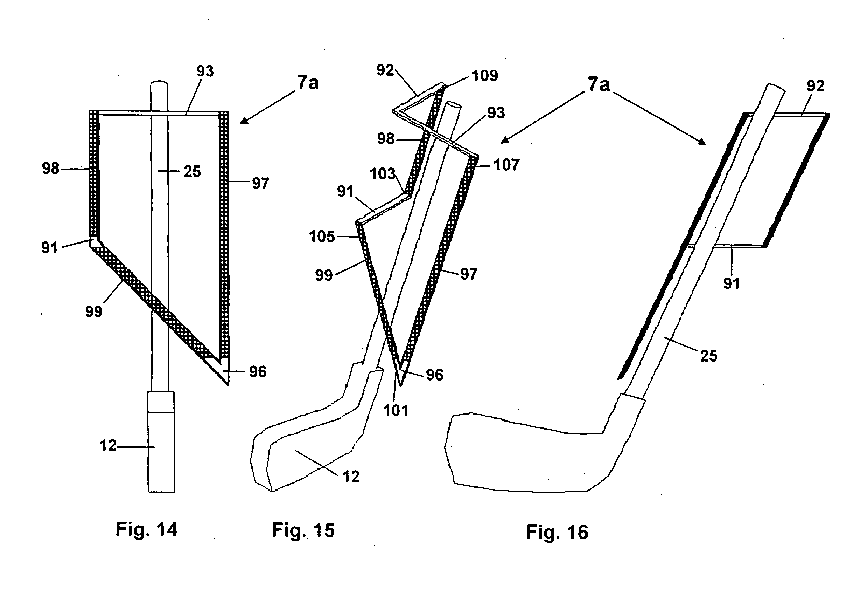

Mit einer Messvorrichtung nach Fig. 13 können auch die Treffmomentfaktoren Winkel offen/geschlossen $W_{og}$, Sweetspot Vertikal-Abweichung und Sweetspot Horizontal-Abweichung sowie Dynamischer Loft $W_{dl}$ einer erfindungsgemäßen hoch/schmalen Reflektorgruppe 7a nach den Figuren 14 bis 16 gemessen werden. Diese Reflektorgruppe 7a kommt mit drei Reflektoren 97, 98, 99 aus, benögt dafür aber mindestens zwei Reflexionslichtschranken der ersten Reflexionslichtschrankengruppe 4, 45, 56 und mindestens zwei Reflexionslichtschranken der zweiten Reflexionslichtschrankengruppe 5, 55, 57. Bei der hoch/schmalen Reflektorgruppe 7a weisen der erste Reflektor 97 und der zweite Reflektor 98 unterschiedliche Längen auf. Beide Reflektoren verlaufen senkrecht sowie parallel zueinander, sind jedoch in verschiedenen räumlichen Ebenen angeordnet. Der dritte Reflektor 99 ist mit seinem unteren Ende 101 vorzugsweise an dem unteren Ende 96 des ersten Reflektors 97 in einem spitzen Winkel angeordnet. Der zweite Reflektor 98 ist aus der Ebene des ersten und dritten Reflektors 97, 99 nach hinten versetzt angeordnet. Das untere Ende 103 des zweiten Reflektors 98 ist mit dem oberen Ende 105 des dritten Reflektor 99 über einen Verbindungssteg 91 in einem definierten Abstand verbunden. Der obere Endbereich 107 des ersten Reflektors 97 ist mit dem oberen Endbereich 109 des zweiten Reflektor 98 über die gewinkelten Verbindungsstege 92, 93 stabilisierend verbunden. Die gewinkelten Verbindungsstege 92, 93 können auch Bestandteil einer dreieck- oder rechteckförmigen Platte sein.

Es liegt im Bereich der Erfindung, dass der zweite Reflektor 98 aus der Ebene des ersten und dritten Reflektors 97, 99 nach vorne versetzt angeordnet ist.

Auch liegt es im Bereich der Erfindung, dass ein Reflektor, nämlich der erste Reflektor 97 oder der zweite Reflektor 98, der hoch/schmalen Reflektorgruppe 7a durch einen direkt auf den Schlägerschaft 25 aufgeklebten retroreflektierenden Streifen 8 ersetzt sein kann, der in einem definierten Abstand zu den beiden anderen Reflektoren 97, 99 oder 98, 99 angeordnet ist.

Die Reflektorgruppen 7, 7a bestehen aus einem in sich stabilen Grundkörper aus Blech oder dünnen Carbonstreifen oder einem anderen bei Geschwindigkeiten von bis zu 230 km/h form- und biegebeständigen Werkstoff der beim Durchwung des Golfschlägers 1 nur einen geringen, vernachlässigbaren zusätzlichen Luftwiderstand erzeugt. Sie sind mit einer Klemmvorrichtung befestigt, die eine unverlierbare sowie verrutschfeste jedoch lösbare Befestigung am Schlägerschaft 25 oberhalb des Schlägerkopfes 12 gewährleistet. Die Entfernung des untersten Endes 71, 96, 101 einer Reflektorgruppe 7, 7a vom Abschlagboden 18 sollte in etwa 1 cm plus der Höhe eines Golfballs 14 plus der Höhe eines langen Tees 13 betragen, damit die Reflektorgruppe 7, 7a auch bei zu tief geführten Schlägen nicht beschädigt werden kann.

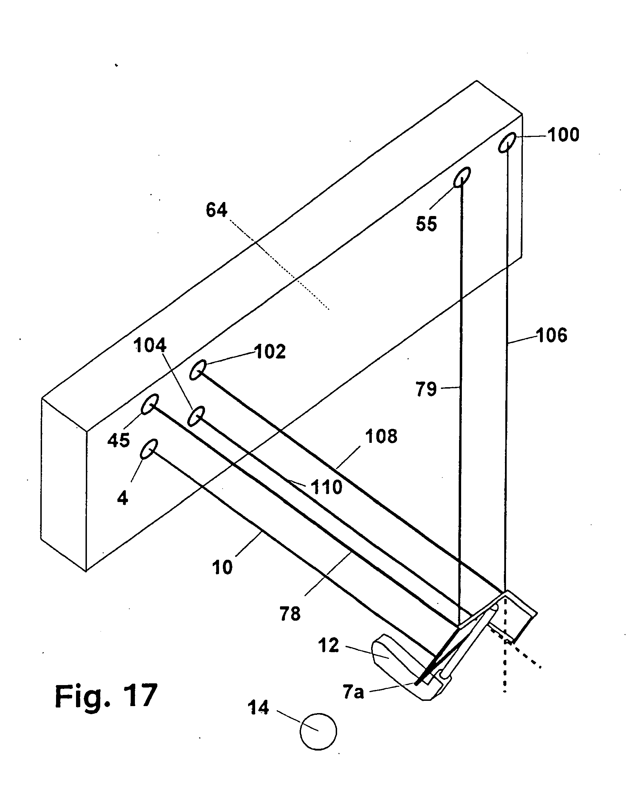

Die hoch/schmale Reflektorgruppe 7a nach den Figuren 14 bis 16 weist gegenüber der niedrig/breiten Reflektorgruppe nach den Figuren 2 und 3 den Vorteil auf, dass aufgrund dessen, dass sie nur halb so breit ist, die Treffmomentfaktoren näher am Treffpunkt 2 des Golfballs 14 gemessen werden können. Die Verlagerung des schräg nach unten verlaufenden dritten Reflektors 99 in die untere Ebene erlaubt auch bei sehr großen Schlägerköpfen eine tiefere Anbringung der Reflektorgruppe 7a am Schlägerschaft 25. Vorteilhaft für eine solche hoch/schmale Reflektorgruppe 7a ist eine Messvorrichtung nach Fig. 17, die auch eine Messung des Treffmomentfaktors Horizontaler Eintreffwinkel $W_{io}$ und eine exaktere Messung der Schlägerkopfgeschwindigkeit V erlaubt.

Eine Messvorrichtung, die sämtliche Treffmomentfaktoren bei Einsatz einer hoch/schmalen Reflektorgruppe 7a nach den Figuren 14 bis 16 messen kann, ist mit mindestens sechs Reflexionslichtschranken 4, 45, 55, 100, 102, 104 ausgestattet. Ein Ausführungsbeispiel einer solchen Messvorrichtung ist als stark vereinfachte Prinzipskizze in Fig. 17 dargestellt. In der Frontseitenwand 64 des Messgeräts 3 sind rechts oder links neben der ersten Reflexionslichtschranke 4 eine in einem Winkel von 90°ausgerichtete achte Reflexionslichtschranke 104 mit ihrem Strahl 110 und neben der dritten Reflexionslichtschranke 45 oberhalb der achten Reflexionslichtschranke 104 eine ebenfalls in einem Winkel von 90°ausgerichtete neunte Reflexionslichtschranke 102 mit ihrem Strahlen 108 angeordnet. Rechts oder links neben der vierten Reflexionslichtschranke 55 ist eine in einem Winkel von 45°ausgerichtete zehnte Reflexionslichtschranke 100 angeordnet.

Bei der Ausführung eines idealen Golfschwungs treffen der Strahl 106 der zehnten Reflexionslichtschranke100 und der Strahl 108 der neunten Reflexionslichtschranke 102 in etwa gleichzeitig auf den ersten Reflektor 97 in dessen oberem Drittel, während der Strahl 110 der achten Reflexionslichtschranke 104 zur selben Zeit auf den Reflektor 97 in dessen unterem Drittel auftrifft, wobei jede Reflexionslichtschranke 100, 102, 104 einen Impuls auslöst. Während sich die Reflektorgruppe 7a weiter in Richtung Golfball 14 bewegt, trifft der Strahl 110 den dritten Reflektor 99 in seinem mittleren Bereich. Wenig später treffen dann der Strahl 79 der vierten Reflexionslichtschranke 55 und der Strahl 78 der dritten Reflexionslichtschranke 45 in etwa gleichzeitig auf den ersten Reflektor 97 in dessen oberem Drittel. Kurz darauf passiert der Strahl 10 der ersten Reflexionslichtschranke 4 den dritten Reflektor 99 in seinem mittleren Bereich und in etwa gleichzeitig der Strahl 106 der zehnten Reflexionslichtschranke100 den, nach hinten versetzten, zweiten Reflektor 98 in etwa der halben Höhe seiner Längserstreckung. Zuletzt passieren der Strahl 79 der vierten Reflexionslichtschranke 55 und der Strahl 78 der dritten Reflexionslichtschranke 45 in etwa gleichzeitig den zweiten Reflektor 98 in etwa der halben Höhe seiner Längserstreckung. Nun trifft der Schlägerkopf 12 den Golfball 14. Die erhaltenen Impulse werden analog den in den Figuren 4, 5, 7, 8 und 10 beschriebenen Zeitmustern ausgewertet.

Wird beispielsweise bei der Ermittlung des Sweetspot Vertikal der Golfschläger 1 zu hoch geführt, so dass der Golfball 14 "getoppt" wird, ist der Abstand der Impulse, die die erste gerade Reflexionslichtschranke 4 nach der Passage des ersten Reflektors 97 und des dritten Reflektors 99 reflektiert, kürzer als wenn der Golfschlag zu tief ausgeführt worden wäre. Das gleiche gilt für die achte Reflexionslichtschranke 104. Wird bei der Ermittlung des Sweetspot Horizontal der Golfschläger zu weit innen geführt, kommen die Impulse der oberen geraden dritten Reflexionslichtschranke 45 und der neunten Reflexionslichtschranke 102 später als die Impulse der oberen schrägen vierten Reflexionslichtschranke 55 und der zehnten Reflexionslichtschranke 100. Umgekehrt ist es, wenn der Golfschläger zu weit außen geführt wird, dann kommen die Impuls früher.

Bei einem geschlossenen Golfschlag ($W_{og}$) sind die Pulsabstände der oberen Reflexionslichtschranken 45, 102, 55, 100 vergrößert, die von einem offen geführten Golfschlag verkleinert. Die Pulsabstände innerhalb der Impuls-Paare der unteren geraden Reflexionslichtschranken 4, 104 sind nur um den Cosinus des offen- oder geschlossen-Winkels verkürzt und ändern sich daher kaum. Bei der Ermittlung des Treffmomentfaktors Horizontaler Eintreffwinkel ($W_{io}$) sind bei einem Out to In geführten Schlag die Abstände zwischen den Impulsen von denselben Reflektoren bei den schrägen Reflexionslichtschranken 55, 100 länger als bei den geraden Reflexionslichtschranken 45, 102. Bei einem In to Out geführten Schlag sind die Abstände zwischen den Impulsen von denselben Reflektoren bei den schrägen Reflexionslichtschranken 55, 100 kürzer als bei den geraden Reflexionslichtschranken 45, 102. Die gesamten Puls-Sequenzen der unteren geraden Reflexionslichtschranken 4, 104 sind nur um den Cosinus des Out-to-In- oder In-to-Out-Winkels verkürzt und ändern sich daher kaum.

Bei der Ermittlung des Treffmomentfaktors Dynamischer Loft $W_{dl}$ eilen bei einem dynamisch vergrößerten Loft die Impulse der unteren ersten Reflexionslichtschranken 4 denen der oberen dritten Reflexionslichtschranke 45 und der fünften Reflexionslichtschranke 56 voraus. Bei einem dynamisch verkleinerten Loft eilen die Impulse nach.

Die Reflektorgruppe 7, 7a sollte eine Höhe besitzen, die gewährleistet, dass alle Reflektoren 19, 20, 21, 22, 23, 97, 98, 99 verwertbare Impulse reflektieren können oder bei einem schlecht ausgeführten Golfschlag zumindest vier Pulse bei einer niedrig/breiten Reflektorgruppe 7 und zumindest sechs Pulse bei einer hoch/schmalen Reflektorgruppe 7 für die Auswertung der Treffmomentfaktoren zur Verfügung stehen.

Auch liegt es im Bereich der Erfindung, dass auf dem Display der Auswerte-, Informationsausgabe- und Speichereinheit 17 eine Kennzahl für die Entwinkelung angezeigt wird. Die Entwinkelungskennzahl charakterisiert die ruckartige Verkürzung der Linie Außenkante kleiner Finger - Ellenbogen bzw. die ruckartige Öffnung des Winkels zwischen Schlägerschaft und linkem Unterarm (bei Rechtshändern) unmittelbar vor dem bzw. im Treffmoment. Eine hohe Entwinkelungskennzahl trägt maßgeblich zur Bescheunigung des Golfschwungs in seiner Endphase und zu einer hohen Schlägerkopfgeschwindigkeit im Treffpunkt 2 bei.

Auch liegt es im Rahmen der Erfindung, dass eine der Reflexionslichtschranken 4, 45, 56 einen Impuls für weitere extern angeschlossene Analysegeräte bei Erreichen des Treffpunktes 2 ausgibt. Beispielsweise kann ein ausgesandter Impuls eine Videokamera (nicht dargestellt) starten bzw. synchronisieren, die als weiteren Treffmomentfaktor den Vertikalen Eintreffwinkel bestimmt. Der Vorteil besteht darin, dass parallel auch eine zeitsynchrone Körperanalyse durchführbar ist.

Die erfindungsgemäße Messvorrichtung arbeitet mit bis zu sechs Laser-Reflex-Lichtschranken mit einem Stromverbrauch von jeweils ca. 20 mA. Daher kann die gesamte Anordnung z.B. auch über die 5-V-Spannung des USB-Busses aus dem Auswerte-Rechner gespeist werden. Die geringe Zahl der Laser-Reflex-Lichtschranken macht den vorgeschlagenen Aufbau preisgünstiger als den im Stand der Technik beschriebenen, auch wenn man in Betracht zieht, dass Laser-Reflex-Lichtschranken teurer als z. B. Infrarot-Reflex-Lichtschranken sind. Der Strahl-Öffnungswinkel der Laser-Reflex-Lichtschranken ist im Rahmen der betrachteten Distanzen (<1 m) vernachlässigbar. Wegen dieser kleinen Strahl-Öffnungswinkel der Laser-Reflex-Lichtschranken konnte die erfindungsgemäße Messvorrichtung ohne Verlust der zeitlichen / räumlichen Auflösung so gestaltet werden, das die retroreflektierenden Streifen über Distanzen von ca. 0,5 m "ausgelesen" werden. Daher sind selbst bei massiven Fehlschlägen kaum Berührungen zwischen Schläger und Messanordnung zu erwarten. Schlimmstenfalls kommt es zum Bruch der am Schlägerschaft angebrachten preisgünstigen Reflektorengruppe.

Ein weiterer Vorteil der Erfindung besteht darin, dass die Leuchtflecke der verwendeten Laser-Reflex-Lichtschranken auch in ca. 0,5 m Arbeitsabstand nur ca. 2 mm ∅ haben. Selbst wenn diese Leuchtflecke auf reflektierende Oberflächen von Golfschlägerkopf oder -schaft geraten, besteht nur eine extrem geringe Wahrscheinlichkeit, dass diese Oberflächen das Licht zum Empfänger der Lichtschranke zurück reflektieren.

Die vorliegende Erfindung nutzt eine spezielle Reflektoren-Anordnung, bei welcher die Koordinaten des Schlägers in Bezug auf den Sweetspot und der Offen/Geschlossen-Winkel durch Integration über einen Weg von ca. 6 cm gewonnen werden. Daher beträgt die Messdauer bei 100 km/h gut 2 ms. Die Zeitauflösung beträgt 6 μs. Das aus der Zeitauflösung resultierende Limit für die Wegauflösung beträgt daher bei 100 km/h

$$0,000006 \text{ s} \cdot 27,7 \text{m/s} = 0,167 \text{ mm}$$

Die wirksame Begrenzung der Systemgenauigkeit resultiert daher auch aus Variationen der Laser-Strahldurchmesser (im Durchschnitt ca. 2 mm) und beträgt in der Praxis <0,2 mm bei 100 km/h.

Bei der vorliegenden Erfindung kann eine Vergrößerung des Versatzes des vierten Reflektors der niedrig/breiten Reflektorgruppe oder des zweiten Reflektors der hoch/schmalen Reflektorgruppe zur Winkelmessung aus der Ebene der anderen Reflektoren die Winkelauflösung (auf Kosten des Messbereichs) prinzipiell beliebig erhöhen. Bei praktikablen Versatz-Tiefen von 30-60 mm wurden Winkelauflösungen von

$$\arcsin \left( \frac{0,2\text{mm}}{30\text{mm}} \right) = 0,38\,°$$

bis

$$\arcsin \left( \frac{0,2\text{mm}}{60\text{mm}} \right) = 0,19\,°$$

erreicht.

Ein weiterer Vorteil der Erfindung besteht darin, dass am Schläger keine elektronisch aktiven Komponenten angebracht werden. Damit entfällt auch die Notwendigkeit einer Energiequelle am Schläger, die nötig ist, um beispielsweise, wie im Stand der Technik beschrieben, Laser-Sensoren und eine Funkstrecke betreiben zu können.

Vor Beginn der ersten Messung mit einem anderen Golfschläger und wenn das Messgerät dazu auffordert, müssen Golfschläger und Reflektorgruppe kalibriert werden. Bei der Kalibrierung wird das Messverfahren ungekehrt.

Der Schlägerkopf wird bei einer ersten Ausführungsform einer Kalibrierungsvorrichtung (nicht dargestellt) in eine definierte Position und Haltung gebracht und die Position der Reflektorgruppe mit einem per Drehspiegel bewegten amplitudenmodulierten Laserstrahl bestimmt, indem mit einer weiteren Reflexionslichtschranke (nicht dargestellt) durch den Schlitz 67 nach Fig. 9 ein definiert bewegter Laserstrahl auf die Kalibrierungsvorrichtung gelenkt wird. Das Antwortmuster der Reflektorgruppe 7 ermöglicht auch, eine eventuelle Dekalibrierung zu erkennen und die Abweichung als Korrekturwert an die Auswerte-, Informationsausgabe- und Speichereinheit 17 zu übertragen.

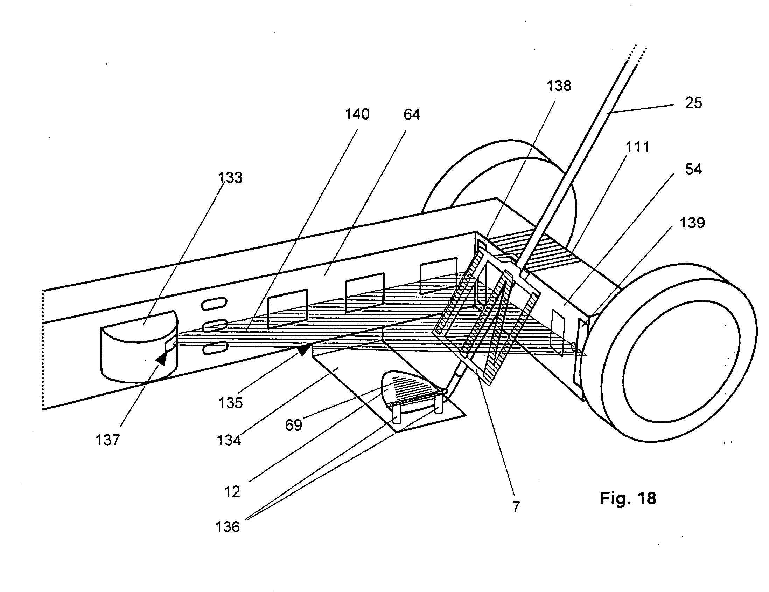

Eine erfindungsgemäße Kalibrationsvorrichtung ist in Fig. 18 dargestellt. Die Koordinaten und die Ausrichtung einer Reflektorgruppe 7, 7a mit retroreflektierenden Flächen 8 können errechnet werden, wenn die Lage des Schlägerkopfes und damit des Sweetspots in Bezug auf die Reflektorgruppe 7, 7a bekannt ist. Die Kalibrationsvorrichtung zur Messung von Winkelabweichungen einer an einem Schlägerschaft 25 eines Golfschlägers 1 rechtwinkelig zum Schlägerblatt 69 der Schlägerkopfes 12 befestigten Reflektorgruppe 7, 7a, besteht aus

- einem Kalibrator 133 mit mindestens einer rotierenden Reflexionslichtschranke 137,
- einer mechanischen Justiereinrichtung 134, die in einem exakten Abstand vom Kalibrator 133 angeordnet ist, wobei die Justiereinrichtung 134 mit einem Anschlagelement 136 für das Schlägerblatt 69 des Schlägerkopfes 12 versehen ist sowie
- mindestens zwei Reflektoren 138, 139 mit retroreflektierenden Flächen 8, die hinter der zu kalibrierenden Reflektorgruppe 7, 7a rechts und links und von dieser seitlich beabstandet angebracht sind. Eine solche Kalibrationsvorrichtung ist in das Messgerät 3 integriert. Der Kalibrator 133 ist in etwa mittig in der Frontseitenwand 64 des Messgeräts 3 angeordnet. Die Justiereinrichtung 134 ist in etwa mittig zwischen Kalibrator 133 und Querseitenwand 54 angeordnet und greift an der Unterseite des Messgeräts 3 in einer definierten Position in eine Verankerung 135 ein und wird dort verrutschfest gelagert. Zwei Referenz-Reflektoren 138, 139 der Kalibrationsvorrichtung sind auf je einem Ende der Vorderseite der Querseitenwand 54 unverlierbar befestigt.

Der Strahlöffnungswinkel der rotierenden Reflexionslichtschranke 137 beträgt < 0,1 bis 0,2° und ihr Strahl 140 bewegt sich rotierend zwischen den beiden Referenz-Reflektoren 138, 139 der Kalibrationsvorrichtung ein- oder mehrfach mit gleichmäßiger Winkelgeschwindigkeit.

Am einem Anschlagelement 136 der Justiereinrichtung 134 und an einer auf der Deckenwand der Querachse 86 angeordneten optischen Strich-Justage-Hilfe werden das Schlägerblatt 69 und der Schlägerschaft 25 in einen Winkel von 90° zu einer am Schlägerschaft 25 optimal befestigten Reflektorgruppe 7, 7a ausgerichtet. Da die Reflektorgruppe 7, 7a jedoch bei ihrer Befestigung am Schlägerschaft nur per Augenmaß grob ausgerichtet. Der Empfänger des Kalibrators 133 erhält während des Kalibriervorgangs Messdaten vom reflektierten rotierenden Strahl 140 über die Reflektoren 19, 20, 21, 22, 23, 97, 98, 99 der Reflektorgruppe 7, 7a und gibt diese eingescannten Messdaten an die Messdatenerfassungseinrichtung 6 sowie die Auswerte-, Informationsausgabe- und Speichereinheit 17 weiter, in der die Verarbeitung der Messdaten und der Datenabgleich zwischen den Kalibrationsdaten und den Messdaten während des Golfschwungs erfolgt. Aus diesen Daten wird der Abstand der Reflektorengruppe vom Sweetspot in allen drei kartesischen Translations-Freiheitsgraden sowie die tatsächliche Drehung um die vertikale Achse bestimmt. Diese Auswertung erfordert die Reflexionen der beiden am Messgerät 3 befestigten Referenz-Reflektoren 138, 139, welche je einen an der Dauer erkennbaren Impuls liefern.

Weil gleichzeitig die Lage und Ausrichtung der Frontfläche des Schlägerkopfes bekannt sind, lässt sich die räumliche Beziehung zwischen der Reflektorengruppe 7, 7a und dem Schlägerblatt 69 des Schlagerkopfes (und des Sweetspots) berechnen und für jeden Golfschläger 1 jedes Spielers 9 individuell speichern.

Diese gespeicherten Kalibrationsdaten werden automatisch, abhängig vom Spieler und dem von ihm gewählten Schläger zu Beginn jeder neuen Schlagserie aufgerufen.

**Patentansprüche**

1. Messvorrichtung zur Messung von Treffmomentfaktoren eines Golfschlägers, bestehend aus:

   a) einem Messgerät mit mindestens einer horizontal ausgerichteten Reflexionslichtschranke,
   b) einer in das Messgerät integrierten Messdatenerfassungseinrichtung,
   c) Reflektoren mit retroreflektierenden Flächen am Golfschläger, die mit den Reflexionslichtschranken korrespondierend in Verbindung stehen
   d) einer Auswerte-, Informationsausgabe- und Speichereinheit, an die die Messdatenerfassungseinrichtung die erfassten Messdaten überträgt,
   e) wobei das Messgerät (3) dem Golfspieler (9) gegenüberliegend angeordnet ist,
   **dadurch gekennzeichnet,**

f) **dass** am Golfschlägerschaft (25) des Golfschlägers (1) eine Reflektorgruppe (7, 7a) mittels einer lösbaren, festsitzenden Klemmverbindung befestigt ist und die Reflektorgruppe (7,7a) mindestens zwei streifenförmige Reflektoren mit retroreflektierenden Flächen (8) aufweist und mindestens drei retroreflektierende Flächen (8) in einer festgelegten Geometrie am Golfschlägerschaft (25) und/oder an der Reflektorgruppe (7, 7a) angeordnet sind,

g) **dass** mindestens eine erste Reflexionslichtschranke (4) mit ihrem Strahl (10) rechtwinkelig zur Idealbahn (11) des Schlägerkopfes (12) im Bereich des Tees (13) und/oder Golfballs (14) auf die Reflektorgruppe (7, 7a) ausgerichtet ist und die drei streifenförmigen retroreflektierenden Flächen (8) beim Durchschlagen des Strahls (10) nacheinander zeitlich versetzte Messdaten in Form von Impulsen auslösen, die der Empfänger der Reflexionslichtschranke (4) empfängt zur Weitergabe an die Messdatenerfassungseinrichtung (6).

2. Messvorrichtung nach Patentanspruch 1,
**dadurch gekennzeichnet,**
**dass** in der Frontseitenwand (64) des Messgeräts (3) in einem seitlichen Abstand zur ersten Reflexionslichtschranke (4) mindestens eine zweite Reflexionslichtschranke (5) angeordnet ist, deren Strahl (15) in einem definierten spitzen Winkel (16) den Strahl (10) der ersten Reflexionslichtschranke (4) kreuzt.

3. Messvorrichtung nach Patentanspruch 1 und/oder 2,
**dadurch gekennzeichnet,**
**dass** in der Frontseitenwand (64) des Messgeräts (3) oberhalb der ersten Reflexionslichtschranke (4) eine dritte Reflexionslichtschranke (45) und oberhalb der zweiten Reflexionslichtschranke (5) eine vierte Reflexionslichtschranke (55) angeordnet ist, deren Strahlen (78, 79) parallel zu den Strahlen (10, 15) der ersten und zweiten Reflexionslichtschranke (4, 5) ausgerichtet sind.

4. Messvorrichtung nach einem oder mehreren der Patentansprüche 1 bis 3,
**dadurch gekennzeichnet,**
**dass** die Reflektorgruppe (7, 7a) aus einem in sich stabilen Grundkörper aus Blech oder Carbon oder einem anderen bei Geschwindigkeiten von bis zu 230 km/h form- und biegebeständigen Werkstoff besteht mit einer Klemmvorrichtung, die eine unverlierbare sowie verrutschfeste jedoch lösbare Befestigung am Schlägerschaft (25) oberhalb des Schlägerkopfes (12) gewährleistet und
**dass** die Entfernung des untersten Endes (71, 96, 101) einer Reflektorgruppe (7, 7a) vom Abschlagboden (18) in etwa 1 cm plus der Höhe eines Golfballs (14) plus der Höhe eines langen Tees (13) beträgt.

5. Messvorrichtung nach einem oder mehreren der Patentansprüche 1 bis 4,
**dadurch gekennzeichnet,**

- **dass** eine erste erfindungsgemäße hoch/schmale Reflektorgruppe (7a) drei Reflektoren (97, 98, 99) mit retroreflektierenden Flächen (8) aufweist, wobei der erste Reflektor (97) und der zweite Reflektor (98) unterschiedliche Längen aufweisen und senkrecht sowie zueinander parallel, jedoch in verschiedenen räumlichen Ebenen angeordnet sind und
- **dass** sich der dritte Reflektor (99), der mit seinem unteren Ende (101), vorzugsweise an dem unteren Ende (96) des ersten Reflektors (97) in einem spitzen Winkel angeordnet ist und
- **dass** der zweite Reflektor (98) aus der Ebene des ersten und dritten Reflektors (97, 99) nach hinten oder vorne versetzt angeordnet ist und
- **dass** das untere Ende (103) des zweiten Reflektors (98) mit dem oberen Ende (105) des dritten Reflektor (99) über einen Verbindungssteg (91) in einem definierten Abstand verbunden ist und
- **dass** der obere Endbereich (107) des ersten Reflektors (97) mit dem oberen Endbereich (109) des zweiten Reflektor (98) über die gewinkelten Verbindungsstege (92, 93) stabilisierend verbunden ist.

6. Messvorrichtung nach einem oder mehreren der Patentansprüche 1 bis 5
**dadurch gekennzeichnet,**
**dass** ein Reflektor, nämlich der erste Reflektor (97) oder der zweite Reflektor (98), der hoch/schmalen Reflektorgruppe (7a) durch einen direkt auf den
Schlägerschaft (25) aufgeklebten retroreflektierenden Streifen (8) ersetzt ist, der in einem definierten Abstand zu den beiden anderen Reflektoren (97, 99 oder 98, 99) angeordnet ist.

7. Messvorrichtung nach einem oder mehreren der Patentansprüche 1 bis 4,
**dadurch gekennzeichnet,**

EP 1 937 372 B1

**dass** eine zweite erfindungsgemäße niedrig/breite Reflektorgruppe (7) fünf Reflektoren (19, 20, 21, 22, 23) aufweist, wobei drei Reflektoren (19, 21, 23) parallel zueinander in einer Ebene und in einem genau definierten Abstand zueinander angeordnet sind und wobei der erste Reflektor (19) und der dritte Reflektor (21) durch den zweiten Reflektor (20) so miteinander verbunden sind, dass sie ein parallel verlaufendes "N" oder ein spiegelbildliches "N" bilden und der vierte Reflektor (22) außerhalb der Ebene jedoch parallel und im gleichen Abstand zu dem dritten Reflektor (21) und dem fünften Reflektor (23) angeordnet ist, so dass bei Draufsicht auf die Reflektorgruppe ein Dreieck zwischen drittem Reflektor (21), viertem Reflektor (22) und fünftem Reflektor (23) erkennbar ist.

8. Messvorrichtung nach einem oder mehreren der Patentansprüche 1 bis 7
   **dadurch gekennzeichnet,**
   **dass** die Reflektorgruppe (7, 7a) am Golfschläger (1) so angebracht ist, dass die Reflektoren (19, 21, 22, 23, 97, 98) bei schräg geneigter Haltung des Golfschlägers (1) in der Ansprechposition vertikal zum Abschlagboden (18) stehen.

9. Messvorrichtung nach einem oder mehreren der Patentansprüche 1 bis 8,
   **dadurch gekennzeichnet,**
   **dass** die Reflektorgruppe (7, 7a) am Golfschläger (1) so angebracht ist, dass die Reflektoren (19, 21, 22, 23, 97, 98) parallel zum Schlägerschaft (25) des Golfschlägers (1) ausgerichtet sind.

10. Messvorrichtung nach einem oder mehreren der Patentansprüche 1 bis 9
    **dadurch gekennzeichnet,**
    **dass** in der Frontseitenwand (64) des Messgeräts (3) oberhalb der dritten Reflexionslichtschranke (45) eine fünfte Reflexionslichtschranke (56) mit einem Strahl (65) und oberhalb der vierten Reflexionslichtschranke (55) eine sechste Reflexionslichtschranke (57) mit einem Strahl (66) angeordnet ist und dass der Abstand der übereinander angeordneten ersten Reflexionslichtschranke (4) von der fünfte Reflexionslichtschranke (56) in der ersten Reflexionslichtschrankengruppe (4, 45, 56) sowie der Abstand der zweiten Reflexionslichtschranke (5) von der sechsten Reflexionslichtschranke (57) in der zweiten Reflexionslichtschrankengruppe (5, 55, 57) mindestens 7 cm betragen sollte.

11. Messvorrichtung nach einem oder mehreren der Patentansprüche 1 bis 10,
    **dadurch gekennzeichnet,**
    **dass** die Reflexionslichtschranken (4, 5, 45, 55, 56, 57) schnell ansprechende Laser-Reflex-Lichtschranken und ihre Strahlen (10, 15, 78, 79, 65, 66) hochfrequent gepulste Laserlichtstrahlen sind und dass die Reflektoren (19, 20, 21, 22, 23, 97, 98, 99) mindestens die gleiche Breite, besser die doppelte Breite der Strahlen (10, 15, 78, 79, 65, 66) aufweisen.

12. Messvorrichtung nach einem oder mehreren der Patentansprüche 1 bis 11,
    **dadurch gekennzeichnet,**
    **dass** im Messgerät (3) zusätzlich ein optischer Linienlaser (26) horizontal in einem Winkel von 90° auf den Golfball (14) so ausgerichtet ist, dass dessen Strahl (27) auf die der Ballflugrichtung (29) entgegengesetzte Außenfläche (28) des Golfballs (14) trifft, wobei die Außenfläche (28) gleichzeitig den idealen Treffpunkt (2) für den Schlägerkopf (12) bildet.

13. Messvorrichtung nach einem oder mehreren der Patentansprüche 1 bis 12,
    **dadurch gekennzeichnet,**
    **dass** das Messgerät (3) L-förmig ausgestaltet ist und in der Querseitenwand (54) des Messgeräts (3) zusätzlich ein zweiter optischer Linienlaser (68) oder ein Mehrfachlinienlaser angeordnet ist, der seinen Strahl (87) bzw. seine Strahlen in einem Winkel ≤ 45° zum Golfball (14) sendet und der Kreuzungspunkt der Strahlen (26, 68) der Ausrichtung des Golfballs (14) und/oder Tees (13) dient.

14. Messvorrichtung nach einem oder mehreren der Patentansprüche 1 bis 13
    **dadurch gekennzeichnet,**
    **dass** die Reflexionslichtschranken der ersten Reflexionslichtschrankengruppe (4, 45, 56) in einem Winkel von 90° in der Frontseitenwand (64) angeordnet ist und ihre horizontal zum Abschlagboden (18) und parallel zueinander verlaufenden Strahlen (10, 78, 65) auf die Reflektorgruppe (7, 7a) oberhalb eines Abschlagpunktes (47) für das Golf spielen ohne Golfball ausgerichtet sind und dass die Reflexionslichtschranken der zweiten Reflexionslichtschrankengruppe (5, 55, 57) vorzugsweise in einem Winkel von 45° in der Frontseitenwand (64) angeordnet sind und ihre horizontal zum Abschlagboden (18) und parallel zueinander verlaufenden Strahlen (15, 79, 66) die Strahlen (10, 78, 65) der ersten Reflexionslichtschrankengruppe (4, 45, 56) maximal 10 cm hinter dem Abschlagpunkt (47) und hinter der Idealbahn (11) kreuzen
und/oder

**dass** das Tee (13) vom Golfspieler (9) aus gesehen links vom potentiellen Abschlagpunkt (47) in einem Abstand, der mindestens der halben Breite der Reflektorgruppe (7, 7a) entspricht, angeordnet ist und dass der Schlägerkopf (12) auf den auf dem Tee (13) liegenden Golfball (14) trifft, unmittelbar nachdem die Reflektorgruppe (7, 7a) den Bereich der Strahlen (10,78, 65) der ersten Reflexionslichtschrankengruppe (4, 45, 56) verlassen hat.

15. Messvorrichtung nach Patentanspruch 14
**dadurch gekennzeichnet,**
**dass** zur exakten elektronischen Ausrichtung des Messgeräts (3) in der Frontseitenwand (64) und in der Vorderseite der Querseitenwand (54) zusätzlich je ein Justierlaser (129, 130) angeordnet sein kann, wobei sich ihre Strahlen (131, 132) auf einer festgelegten Linie einer über das Tee (13) gestülpten Schablone aufeinandertreffen sobald sich das Messgerät in der für die exakte Ausführung der Messungen erforderlichen Position befindet.

16. Messvorrichtung nach einem oder mehreren der Patentansprüche 1 bis 15
**dadurch gekennzeichnet,**
**dass** in der Frontseitenwand (64) des Messgeräts (3) rechts oder links neben der ersten Reflexionslichtschranke (4) eine in einem Winkel von 90°ausgerichtete achte Reflexionslichtschranke (104) und neben der dritten Reflexionslichtschranke (45) oberhalb der achten Reflexionslichtschranke (104) eine ebenfalls in einem Winkel von 90°ausgerichtete neunte Reflexionslichtschranke (102) mit ihren Strahlen (108, 110) angeordnet ist und
**dass** rechts oder links neben der vierten Reflexionslichtschranke (55) eine in einem Winkel von 45°ausgerichtete zehnte Reflexionslichtschranke (100) angeordnet ist und
**dass** der seitliche Abstand der Reflexionslichtschranken (4, 104 und/oder 45, 102 und/oder 55, 100) der Breite der aus fünf Reflektoren (19, 20, 21, 22, 23) bestehenden niedrig/breiten Reflektorgruppe (7) oder der doppelten Breite der aus zwei oder drei Reflektoren (97, 98, 99) bestehenden hoch/schmalen Reflektorgruppe (7a) entspricht.

17. Messvorrichtung nach einem oder mehreren der Patentansprüche 1 bis 16,
**dadurch gekennzeichnet,**
**dass** die Messdatenerfassungseinrichtung (6) das Zeitmuster der Reflexe von der Reflektorgruppe (7, 7a) während des Golfschwungs erfasst und an die Auswerte-, Informationsausgabe- und Speichereinheit (17), die vorzugsweise ein handelsüblicher PC oder ein Notebook ist, weiterleitet und
**dass** aus den Messdaten des Golfschwungs die Berechnung der Treffmomentfaktoren

       a) Schlägerkopfgeschwindigkeit,
       b) Schlagflächenstellung als Winkel offen/geschlossen $W_{og}$,
       c) Sweetspot Vertikal als Sweetspot-Vertikal-Abweichung
       d) Sweetspot Horizontal als Sweetspot-Horizontal-Abweichung,
       e) Horizontaler Eintreffwinkel $W_{io}$ und unter bestimmten Voraussetzungen
       f) Dynamischer Loft $W_{dl}$

ganz oder teilweise erfolgt, je nach Bedarf und Trainingsziel.

18. Messvorrichtung nach einem oder mehreren der Patentansprüche 1 bis 17
**dadurch gekennzeichnet,**
**dass** das Messgerät (3) symmetrisch zu seiner horizontalen Mittenebene aufgebaut und sowohl für Rechts- als auch Linkshänder einsetzbar ist, wobei ein integrierter Lagesensor dafür sorgt, dass beispielsweise die spiegelbildlich angeordnete fünfte Reflexionslichtschranke (56) die Funktion der ersten Reflexionslichtschranke (4) und die spiegelbildlich angeordnete sechste Reflexionslichtschranke (57) die Funktion der zweiten Reflexionslichtschranke (5) übernimmt.

19. Messvorrichtung nach einem oder mehreren der Patentansprüche 1 bis 18,
**dadurch gekennzeichnet,**
**dass** im Messgerät (3) für die Ermittlung des Treffmomentfaktors Dynamischer Loft $W_{dl}$ zusätzlich eine weitere siebente Reflexionslichtschranke mit einem Strahl (81), der parallel zu den Strahlen (10, 78, 65) der ersten Reflexionslichtschrankengruppe (4, 45, 56) verläuft, angeordnet sein kann, wobei einer der Reflektoren (19, 21, 23) der niedrig/breiten Reflektorgruppe (7), vorzugsweise der dritte Reflektor (21), mit einer Reflektorstabverlängerung (82) verlängert ist oder dass eine retroreflektierende Fläche (8) oberhalb der Reflektorgruppe (7) direkt auf dem Schlägerschaft (25) angebracht ist.

20. Messvorrichtung nach Patentanspruch 19,
**dadurch gekennzeichnet,**
**dass** die siebente Reflexionslichtschranke über einen Klappmechanismus in der Deckenwand (73) und/oder der Unterseite (74) des Messgeräts (3) schwenkbar gelagert ist oder als Zusatzteil über eine Steckverbindung aufgesetzt ist.

21. Messvorrichtung nach einem oder mehreren der Patentansprüche 1 bis 20,
**dadurch gekennzeichnet,**
**dass** in der Vorderseite der Querseitenwand (54) ein Radar-Hochgeschwindigkeits-Transceiver (51) angeordnet und horizontal in Richtung Golfball und/oder Tee ausgerichtet ist, der im Zusammenwirken mit einer der Reflexionslichtschranken der ersten Reflexionslichtschrankengruppe (4, 45, 56) und dem fünften Reflektor (23) der niedrig/ breiten Reflektorgruppe (7) oder dem zweiten Reflektor (98) der hoch/schmalen Reflektorgruppe (7a) per Dopplerfrequenzmessung zusätzlich den Treffmomentfaktor Schlägerkopfgeschwindigkeit alternativ misst und dass der Radar-Hochgeschwindigkeits-Transceiver (51) zusätzlich die Schlägerkopfgeschwindigkeit als Funktion der Zeit erfasst, während der Schlägerkopf (12) sich im Bereich des Radarstrahls (53) aufhält, wobei mit dem Zeitbezug zu den Impulsen der ersten Reflexionslichtschrankengruppe (4, 45, 56) der Verlauf der Schlägerkopfgeschwindigkeit als Funktion der Schlägerkopfposition berechnet werden kann.

22. Messvorrichtung nach einem oder mehreren der Patentansprüche 1 bis 21
**dadurch gekennzeichnet,**
**dass** das Messgerät (3) mit einem Mikroprozessor oder einem Signalprozessor zur Triggerung des eigentlichen Messvorgangs ausgestattet ist, wobei der Radar-Hochgeschwindigkeits-Transceiver (51) per Doppler-Radar mit einem Inphase/Quadrature phase-Mischer pendelnde Bewegungen des Golfschlägers (1) in der Vorbereitungsphase des Golfschwungs sowie die Bewegungsrichtung erkennt und den Messvorgang erst ab einer festgelegten Geschwindigkeit im eigentlichen Durchschwung startet.

23. Messvorrichtung nach einem oder mehreren der Patentansprüche 1 bis 22
**dadurch gekennzeichnet,**
**dass** die Messdatenerfassungseinrichtung (6) aus einer Soundkarte oder einer Mehrkanalerfassungs- und Verarbeitungseinheit besteht, die mit der für die Auswertung der Messdaten erforderlichen Software ausgestattet ist und dass die Auswerte-, Informationsausgabe- und Speichereinheit (17) oder eine in die Querachse (54) integrierte Batterie das Messgerät mit Strom versorgt, wenn kein externer Stromanschluss verfügbar ist.

24. Messvorrichtung nach einem oder mehreren der Patentansprüche 1 bis 23
**dadurch gekennzeichnet,**
**dass** das Messgerät (3) mit Rädern (58, 59) an seiner Querachse (86) und mit je einem Griff (60, 61) oberhalb und unterhalb der Längsachse (63) im Bereich des optischen Linienlasers (26) versehen ist und die Griffe (60, 61) gleichzeitig als Standbeine für das Messgerät (3) in Rechts- und Linkshänderfunktion dienen, wobei Griffhöhe und Raddurchmesser für eine waagerechte Lage des Messgerätes (3) sorgen.

25. Messvorrichtung nach einem oder mehreren der Patentansprüche 1 bis 24
**dadurch gekennzeichnet,**
**dass** diverse mit dem Schlägerkopf (1) bedienbare optisch oder kapazitiv auslösende Schalter (62) in der Frontseitenwand (64) des Messgeräts (3) angeordnet sind, die das Starten oder Zurücksetzen eines Programms mit dem Schläger ermöglichen, ohne dass der Spieler (9) dazu die Auswerte-, Informationsausgabe- und Speichereinheit (17) händisch bedienen muss.

26. Messvorrichtung nach einem oder mehreren der Patentansprüche 1 bis 25,
**dadurch gekennzeichnet,**
**dass** eine oder mehrere der Reflexionslichtschranken der ersten Reflexionslichtschrankengruppe (4, 45, 56) einen Impuls zum Start weiterer extern angeschlossener Analysegeräte ausgeben.

27. Kalibrationsvorrichtung zur Messung von Winkelabweichungen von einem 90°-Winkel einer an einem Schlägerschaft (25) eines Golfschlägers (1) nach Augenmaß in etwa rechtwinkelig zum Schlägerblatt (69) des Schlägerkopfes (12) befestigten Reflektorgruppe (7, 7a), bestehend aus

a) einem Kalibrator (133) mit mindestens einer rotierenden Reflexionslichtschranke (137),

b) einer mechanischen Justiereinrichtung (134), die in einem exakten Abstand vom Kalibrator (133) angeordnet ist, wobei die Justiereinrichtung (134) mit einem Anschlagelement (136) für das Schlägerblatt (69) des Schlägerkopfes (12) versehen ist sowie

c) mindestens zwei Reflektoren (138, 139) mit retroreflektierenden Flächen (8), die hinter der zu kalibrierenden Reflektorgruppe (7, 7a) rechts und links und von dieser seitlich beabstandet angebracht sind.

28. Kalibrationsvorrichtung nach Patentanspruch 27,
**dadurch gekennzeichnet,**
**dass** die Kalibrationsvorrichtung in das Messgerät (3) nach Patentanspruch 1 integriert ist und
**dass** der Kalibrator (133) in etwa mittig in der Frontseitenwand (64) des Messgeräts (3) angeordnet ist und
**dass** die Justiereinrichtung (134) in etwa mittig zwischen Kalibrator (133) und Querseitenwand (54) an der Unterseite des Messgeräts (3) in einer definierten Position in eine Verankerung (135) eingreift und verrutschfest gelagert ist und dass die beiden Reflektoren (138, 139) der Kalibrationsvorrichtung auf je einem Ende der Vorderseite der Querseitenwand (54) unverlierbar befestigt sind.

29. Kalibrationsvorrichtung nach Patentanspruch 27 und/oder 28,
**dadurch gekennzeichnet,**
**dass** der Strahlöffnungswinkel der rotierenden Reflexionslichtschranke (137) < 0,1 bis 0,2° ist und dass sich ihr Strahl (140) zwischen den beiden Reflektoren (138, 139) der Kalibrationsvorrichtung ein- oder mehrfach mit gleichmäßiger Winkelgeschwindigkeit rotierend bewegt und
**dass** das am Anschlagelement (136) der Justiereinrichtung (134) ausgerichtete Schlägerblatt (69) einen Winkel von 90° zu der am Schlägerschaft (25) optimal befestigten Reflektorgruppe (7, 7a) einnimmt, wobei der Empfänger des Kalibrators (133) während des Kalibriervorgangs vom reflektierten rotierenden Strahl (140) über die Reflektoren (19, 20, 21, 22, 23, 97, 98, 99) der Reflektorgruppe (7, 7a) Messdaten über die tatsächlichen Abstände der Reflektorgruppe (7, 7a) zum Sweetspot und über die tatsächliche Drehung der Reflektorengruppe um die vertikale Achse erhält und wobei die Weitergabe der eingescannten Messdaten an die Messdatenerfassungseinrichtung (6) sowie deren Verarbeitung in der Auswerte-, Informationsausgabe- und Speichereinheit (17) erfolgt.

30. Kalibrationsvorrichtung nach einem oder mehreren der Patentansprüche 27 bis 29,
**dadurch gekennzeichnet,**
**dass** in der Auswerte-, Informationsausgabe- und Speichereinheit (17) der Datenabgleich zwischen den Kalibrationsdaten und den Messdaten während des Golfschwungs durch Berechnung eines Korrekturfaktors erfolgt, wenn die Reflektorgruppe (7, 7a) in einem von 90° abweichenden Winkel zum Schlägerblatt (69) am Schlägerschaft (25) befestigt wurde.

**Claims**

1. Measuring device for measuring hitting parameters of a golf club, with the measuring system comprising:

a) a measurement device with at least one horizontally directed reflective light barrier,
b) a data acquisition device which is integrated into the measurement device,
c) reflectors with retroreflective surfaces at the golf club which correspond functionally to the reflective light barrier,
d) an evaluation-, information output- and storage unit to which the data acquisition device forwards the acquired measured data,
e) whereas the measurement device (3) is arranged opposite to the golfer (9),
**characterized in that**
f) a group of reflectors (7, 7a) is attached to the shaft (25) of the golf club (1) with a tight, but detachable clamp-connection and the group of reflectors (7, 7a) comprises at least two strip-shaped reflectors with retroreflective surfaces (8) and at least three retro-reflective areas (8) are arranged with defined geometry at the golf club shaft (25) and/or at the group of reflectors (7, 7a),
g) at least one first reflective light barrier (4) points with its beam (10) at right angle to the ideal swing path (11) of the club head (12) near the tee (13) and/or the golf ball (14) and the three strip-shaped retro-reflective surfaces (8) upon crossing the beam (10) elicits temporally staggered pulse-shaped measuring data, which the receiver of the reflective light barrier (4) receives for forwarding to the data acquisition device (6).

2. Measuring device according to claim 1

**characterized in that**
in the front side wall (64) of the measurement device (3) at some lateral distance to the first reflective light barrier (4) at least one second reflective light barrier (5) is arranged, the beam (15) of which crosses the beam (10) of the first reflective light barrier (4) at an acute angle (16).

3. Measuring device according to claim 1 and/or 2
**characterized in that**
in the front side wall (64) of the measurement device (3) above the first reflective light barrier (4) a third reflective light barrier (45) and above the second reflective light barrier (5) a fourth reflective light barrier (55) are arranged, the beams (78, 79) of which parallel the beams (10, 15) of the first and second reflective light barriers (4, 5).

4. Measuring device according to one or several of the claims 1 through 3
**characterized in that**
the group of reflectors (7, 7a) comprises an intrinsically stable basic body made of sheet metal or carbon or another material which is dimensionally stable and flexurally rigid at speeds of up to 230 km/h, with a clamp-connection that ensures a captive, slip-proof, yet detachable fixing to the club shaft (25) above the club head (12) and **in that** the distance of the lower edge (71, 96, 101) of a group of reflectors (7, 7a) from the playing surface (18) amounts to about 1 cm plus the height of a golf ball (14) plus the height of a long tee (13).

5. Measuring device according to one or several of the claims 1 through 4
**characterized in that**

- a first high/narrow group of reflectors (7a) according to the invention comprises three reflectors (97, 98, 99) with retro-reflective surfaces (8) whereupon the first reflector (97) and the second reflector (98) have different lengths and are arranged vertically and paralleling each other but in different planes and
- the third reflector (99), is arranged with its lower end (101) preferably at the lower end (96) of the first reflector (97) at an acute angle and
- the second reflector (98) is arranged offset forwardly or backwardly with respect to the plane of the first and third reflectors (97, 99), and
- the lower end (103) of the second reflector (98) is linked to the upper end (105) of the third reflector (99) by a joining piece (91) at a defined distance and
- the upper end (107) of the first reflector (97) is linked to the upper end (109) of the second reflector (98) by the angled joinig pieces (92, 93) in a stabilizing way.

6. Measuring device according to one or several of the claims 1 through 5
**characterized in that**
one reflector, namely the first reflector (97) or the second reflector (98) of the high/narrow group of reflectors (7a) may be replaced by a retroreflective strip (8) that is directly glued on the club shaft (25) arranged at a defined distance to the other two reflectors (97, 99 or 98, 99).

7. Measuring device according to one or several of the claims 1 through 4
**characterized in that**
a second low/wide group of reflectors (7) according to the invention comprises five reflectors (19, 20, 21, 22, 23) whereas three reflectors (19, 21, 23) are arranged parallel each other and in a well defined distance from each other in which the first reflector (19) and the third reflector are joint by the second reflector (20) in a way, that they constitute an "N" or a mirror-imaged "N" and in which the fourth reflector (22) is arranged outside the plane of, but running parallel and at equal distance to the third reflector (21) and the fifth reflector (23) so that in top view on the group of reflectors a triangle between the third reflector (21) the fourth reflector (22) and the fifth reflector (23) is discernible.

8. Measuring device according to one or several of the claims 1 through 7
**characterized in that**
the group of reflectors (7, 7a) is mounted to the golf club (1) in a way that the reflectors (19, 21, 22, 23, 97, 98) stand vertically with respect to the playing surface (18) when the golf club (1) is held inclined in the addressing position.

9. Measuring device according to one or several of the claims 1 through 8
**characterized in that**
the group of reflectors (7, 7a) is mounted to the golf club (1) in a way that the reflectors (19, 21, 22, 23, 97, 98) run in parallel with the club shaft (25) of the golf club (1).

**10.** Measuring device according to one or several of the claims 1 through 9
**characterized in that**
in the front side wall (64) of the measuring device (3) a fifth reflective light barrier (56) with beam (65) is mounted above the third reflective light barrier (45) and a sixth reflective light barrier (57) with beam (66) is mounted above the fourth reflective light barrier (55)
and **in that** the distance of the first reflective light barrier (4) from the fifth reflective light barrier (56) within the vertically tiered first group of reflective light barriers (4, 45, 56) and the distance of the second reflective light barrier (5) from the sixth reflective light barrier (57) within the second group of reflective light barriers (5, 55, 57) should be at least 7 cm.

**11.** Measuring device according to one or several of the claims 1 through 10
**characterized in that**
the reflective light barriers (4, 5, 45, 55, 56, 57) are fast responding reflective laser light barriers and their beams (10, 15, 78, 79, 65, 66) high-frequency-pulsed laser beams and **in that** the reflectors (19, 20, 21, 22, 23, 97, 98, 99) have at least the same width, better twice the width of the beams (10, 15, 78, 79, 65, 66).

**12.** Measuring device according to one or several of the claims 1 through 11
**characterized in that**
in the measuring device (3) an additional optical line laser (26) points horizontally at an angle of 90° to the golf ball (14) in a way that its beam (27) meets the surface (28) of the golf ball (14) opposite to the balls direction of flight (29) where the surface (28) constitutes the ideal contact point (2) for the club head.

**13.** Measuring device according to one or several of the claims 1 through 12
**characterized in that**
the measuring device (3) is designed L-shaped and to the transverse wall (54) of the measuring device (3) is supplemental mounted a second optical line laser (68) or multi-line-laser, which sends its beam (87) or its beams, respectively, at an angle of ≤ 45° to the golf ball (14) where the intersection of the beams (26, 68) serve to align the golf ball (14) and/or the tee (13).

**14.** Measuring device according to one or several of the claims 1 through 13
**characterized in that**
the reflective light barriers of the first group of reflective light barriers (4, 45, 56) are mounted at an angle of 90° to the front side wall (64) in a way that their beams (10, 78, 65) run parallel to each other and to the playing surface (18) pointing towards the group of reflectors (7, 7a) above the tee point (47) for golfing without ball and that the reflective light barriers of the second group of reflective light barriers (5, 55, 57) are mounted to the front side wall (64) preferably at an angle of 45° in a way that their beams (15, 79, 66) run parallel to each other and to the playing surface (18) and that they cross the beams (10, 78, 65) of the first group of reflective light barriers maximally 10 cm behind the tee point (47) and behind the ideal swing path (11)
and/or
that - seen from the golfer (9) - the tee (13) is placed left from the potential tee point (47) at a distance, that corresponds at least to half the width of the group of reflectors (7, 7a), and
that the club head 12 hits the golf ball (14) that is lying on the tee (14)
immediately after the group of reflectors (7, 7a) has left the region of the beams (10, 78, 65) of the first group of reflective light barriers (4, 45, 56).

**15.** Measuring device according to claim 14
**characterized in that**
for an exact electronic orientation of the measuring device (3), both in the front side wall (64) and in the front face of the cross side wall (54) additional
adjustment lasers (129, 130) are mounted whereupon, whenever the measuring device is properly aligned in the position that is required for exact measurements, their beams (131, 132) intersect on a specific line on a template that is pulled over the tee (13).

**16.** Measuring device according to one or several of the claims 1 through 15
**characterized in that**
an eights reflective light barrier (104), pointing at an angle of 90°, is mounted at the front side wall (64) of the measuring device (3) left or right of the first reflective light barrier and that a ninth reflective light barrier (102) with their beams (108, 110) - also pointing at an angle of 90° - is placed beside the third reflective light barrier (45) and above the eights reflective light barrier (104) and

that a tenth reflective light barrier (100) - pointing at an angle of 45° - is mounted on the right or left side by the fourth reflective light barrier (55) and

that the lateral distance of the reflective light barriers (4, 104, and/or 45, 102 and/or 55, 100) corresponds to the width of the low/wide type group of reflectors (7) which consists of five reflectors (19, 20, 21, 22, 23) or corresponds the twice of the width of the high/narrow type group of reflectors (7a) which consists of three reflectors (97, 98, 99).

17. Measuring device according to one or several of the claims 1 through 16
**characterized in that**
during the golf swing, the data acquisition unit (6) captures the temporal pattern of the reflections from the group of reflectors (7, 7a), forwards it to the evaluation-, information output- and storage unit (17), which is preferably a customary PC or notebook, and
that from the raw data of the golf swing an evaluation of the hitting parameters

a) club head speed
b) club face position as angle open/closed $A_{og}$
c) sweet spot vertical as vertical deviation from the sweet spot
d) sweet spot horizontal as horizontal deviation from the sweet spot
e) horizontal angle of approach in/out $A_{io}$, and under certain conditions
f) dynamic loft $A_{dl}$

all or part is done, depending on requirement and on purpose of training.

18. Measuring device according to one or several of the claims 1 through 17
**characterized in that**
the measuring device (3) is designed symmetrically with respect to the horizontal midplane and it is suitable both for right- and left-handers, whereupon an intelligent position sensor ensures that for instance the mirror-invertedly mounted fifth reflective light barrier (56) takes over the function of the first reflective light barrier (4) and the mirror-invertedly mounted sixth reflective light barrier (57) takes over the function of the second reflective light barrier (5).

19. Measuring device according to one or several of the claims 1 through 18
**characterized in that**
in the measuring device (3) an additional seventh reflective light barrier with a beam (81) that parallels the beams (10, 78, 65) of the first group of reflective light barriers (4, 45, 56) may be mounted for determining the hitting parameter angle of dynamic loft $A_{dl}$, whereupon one of the reflectors (19, 21, 23) of the low/wide type group of reflectors (7), preferably the third reflector (21), is extended by a longer reflector pin (82) or that a retroreflective surface (8) is put about directly to the club shaft (25) above the group of reflectors (7).

20. Measuring device according to claim 19
**characterized in that**
the seventh reflective light barrier is mounted pivotably by a folding mechanism in the upper side (73) and/or the lower side (74) of the measuring device (3), or that the seventh reflective light barrier is attached as an accessory by a plug-type connector.

21. Measuring device according to one or several of the claims 1 through 20
**characterized in that**
in the front face of the cross side wall (54) a high speed radar transceiver (51) is mounted and directed towards the golf ball and/or tee, which, interacting with one of the reflective light barriers of the first group of reflective light barriers (4, 45, 56) and the fifth reflector (98) of the low/wide group of reflectors (7) or the second reflector (98) of the high/narrow group of reflectors (7a) measures in an
alternative way by Doppler frequency analysis the hitting parameter club head speed and that in addition, the high speed radar transceiver (51) measures the club head speed as a function of time while the club head (12) sojourns in the reach of the radar beam lobe, whereby, exploiting the temporal relation to the pulses of the first group of reflective light barriers (4, 45, 56), the club head speed as a function of the club head position can be calculated.

22. Measuring device according to one or several of the claims 1 through 21
**characterized in that**
the measuring device (3) may be equipped with a microprocessor or with a signal-processor for triggering the actual measuring process, whereupon the high speed radar transceiver (51) distinguishes by Doppler radar with an inphase/quadrature phase mixer the oscillating movements of the golf club (1) in the preparatory stage of the golf swing as well as the direction of movement and starts the measuring process only above a preset speed during the real downswing.

23. Measuring device according to one or several of the claims 1 through 22
**characterized in that**
the data acquisition unit (6) comprises a sound card or of a multi-channel data acquisition- and processing unit which is equipped with the software that is necessary to interpret the data and that the evaluation-, information output- and storage unit (17) or a battery that is integrated to the transverse bar (54), supply the measuring device with power if no external power outlet is available.

24. Measuring device according to one or several of the claims 1 through 23
**characterized in that**
the measuring device (3) is equipped with wheels (58, 59) at its transverse axis (86) and with any one handles (60, 61), one above and one below the longitudinal axis (63) near the optical line laser (26) and the handles (60, 61) serve also as supporting stands for the measuring device (3) in a right- and a left-hander mode, whereupon the height of the handles and the diameter of the wheels ensure the horizontal orientation of the measuring device (3).

25. Measuring device according to one or several of the claims 1 through 24
**characterized in that**
a plurality of optically or capacitively actuated switches (62) which can be activated by the club head (1) are mounted to the front side wall (64) of the measuring device (3), which allow to launch or to reset a program with the club, without that this requires player (9) to operate the evaluation-, information output- and storage unit (17) manually.

26. Measuring device according to one or several of the claims 1 through 25
**characterized in that**
one or several of the reflective light barriers of the first group of reflective light barriers (4, 45, 56) issues an impulse to trigger further, external analysis devices.

27. Calibration device for measuring angular variation from a 90° angle of a group of reflectors (7, 7a) which is mounted by eye on a club shaft (25) of a golf club (1) approximately right-angled to the club face (69) of the club head (12), consisting of

a) a calibrator (133) with minimally one rotating reflective light barrier (137),
b) a mechanical adjusting device (134), placed at a well defined distance from the calibrator (133), whereupon the adjusting device (134) is equipped with a stop (136) for the club face (69) of the club head (12), and
c) minimum two reflectors (138, 139) with retroreflective surfaces (8), which are placed behind the group of reflectors (7, 7a) that is to calibrate, to the right and to the left and of this lateral distanced.

28. Calibration device according to claim 27
**characterized in that**
the calibration device is integrated to the measuring device (3) according to claim 1 and
that the calibrator is mounted approximately centrally to the front side wall (64) of the measuring device (3) and
that the adjusting device (134) is engaged and skid-proof supported in a catch (135) at a defined position at the lower side of the measuring device (3) approximately midways between the calibrator (133) and the cross side wall (54) and
that the two reflectors (138, 139) of the calibration device are placed undetachably to the respective ends of the front face of the cross side wall (54).

29. Calibration device according to claim 27 and/or 28
**characterized in that**
the beam aperture of the rotating reflective light barrier (137) is <0.1° to 0.2° and that its beam (140) oscillates one or several with a rotating movement of constant angular velocity between the two reference reflectors (138, 139) and that the club face (69) which is aligned at a stopper (136) of the adjusting device (134), has an angle of 90° with respect to the optimally to the club shaft (25) attached group of reflectors (7, 7a), whereupon, during the calibration process, the receiver of the calibrator (133) obtains from the reflected rotating beam (140) readings from the reflectors (19, 20, 21, 22, 23, 97, 98, 99) of the group of reflectors (7, 7a) about the real distances of the group of reflectors (7, 7a) from the sweet spot and about the real twist of the group of reflectors around the vertical axis and, whereupon, a transfer of the scanned readings is effected to the data acquisition device (6) and processed in the evaluation-, information output- and storage unit (17).

**30.** Calibration device according to one or several of the claims 27 through 29
**characterized in that**
a data reconciliation takes place in the evaluation-, information output- and storage unit (17) between the calibration data and the readings during a golf swing by calculating a correction factor if the angle at which the group of reflectors (7, 7a) was attached to the club shaft (25) differs from 90° to the club face (25).


**Revendications**

**1.** Dispositif de mesure de facteurs de moment d'impact d'une crosse de golf, composé de :

a) un appareil de mesure avec au moins une barrière lumineuse à réflexion placée à l'horizontrale,
b) un dispositif de saisie de données de mesure intégré dans l'appareil de mesure,
c) réflecteurs à surfaces rétroréflectrices sur la crosse de golf, qui sont en liaison en correspondance avec les barrières lumineuses à réflexion,
d) une unité d'analyse, de sortie d'information et d'enregistrement, à laquelle le dispositif de saisie de données de mesure transmet les données de mesure saisies,
e) l'appareil de mesure (3) étant placé en face du joueur de golf (9),
**caractérisé en ce que**
f) un groupe de réflecteurs (7, 7a) est fixé au manche (25) de la crosse de golf (1) au moyen d'une jonction par serrage bloqué détachable et que le groupe de réflecteurs (7, 7a) dispose d'au moins deux réflecteurs en forme de bande avec surfaces rétroréflectrices (8) et qu'au moins trois surfaces rétroréflectrices (8) sont disposées dans une géométrie déterminée au manche de crosse de golf (25) et/ou au groupe de réflecteurs (7, 7a),
g) au moins le rayon (10) d'une première barrière lumineuse à réflexion (4) est orienté à angle droit par rapport au trajet idéal (11) de la tête de crosse (12) dans la zone du tee (13) et/ou de la balle de golf (14) sur le groupe de réflecteurs (7, 7a) et que les trois surfaces rétroréflectrices en forme de bande (8) déclenchent, au passage du rayon (10), des données de mesure les unes après les autres dans le temps sous forme d'impulsions, que le récepteur de la barrière lumineuse à réflexion (4) reçoit pour les transmettre au dispositif de saisie des données de mesure (6).

**2.** Dispositif de mesure selon la spécification de brevet 1,
**caractérisé en ce que**
au moins une deuxième barrière lumineuse à réflexion (5) est disposée dans la paroi frontale (64) de l'appareil de mesure (3) à un écart latéral par rapport à la première barrière lumineuse à réflexion (4), le rayon (15) de la deuxième barrière lumineuse à réflexion croisant à un angle aigu défini (16) le rayon (10) de la première barrière lumineuses à réflexion (4).

**3.** Dispositif de mesure selon la spécification de brevet 1 et/ou 2,
**caractérisé en ce que**
une troisième barrière lumineuse à réflexion (45) est disposée dans la paroi latérale [du devant oder] frontale (64) de l'appareil de mesure (3) au-dessus de la première barrière lumineuse à réflexion (4) et qu'une quatrième barrière lumineuse à réflexion (55) est placée au-dessus de la deuxième barrière lumineuse à réflexion (5), les rayons de la quatrième barre lumineuse de réflexion (78, 79) étant parallèles aux rayons (10, 15) de la première et de la deuxième barrière lumineuse à réflexion (4, 5).

**4.** Dispositif de mesure selon une ou plusieurs des spécifications de brevet 1 à 3,
**caractérisé en ce que**
le groupe de réflecteurs (7, 7a) est réalisé dans un corps de base stable en tôle ou carbone ou dans une autre matière résistante à la déformation et à la flexion à des vitesses de jusqu'à 230 km/h et dispose d'un dispositif de serrage, qui garantit une fixation imperdable et antiglissante, toutefois détachable, au manche de crosse (25) au-dessus de la tête de crosse (12) et que la distance de l'extrémité inférieure (71, 96, 101) d'un groupe de réflecteurs (7, 7a) par rapport au sol de frappe (18) est d'environ 1 cm plus la hauteur d'une balle de golf (14) plus la hauteur d'un tee long (13).

**5.** Dispositif de mesure selon une ou plusieurs des spécifications de brevet 1 à 4,
**caractérisé en ce que**

- le premier groupe haut/étroit (7a) de réflecteurs selon l'invention dispose de trois réflecteurs (97, 98, 99) à surfaces rétroréflectrices (8), le premier réflecteur (97) et le deuxième réflecteur (98) présentant des longueurs différentes et étant placé à la verticale ainsi qu'en parallèle l'un à l'autre, toutefois à différents niveaux dans l'espace et
- le troisième réflecteur (99) est disposé à angle aigu avec son extrémité inférieure (101), de préférence à l'extrémité inférieure (96) du premier réflecteur (97) et
- le deuxième réflecteur (98) du niveau du premier et du troisième réflecteur (97, 99) est disposé décalé vers l'arrière ou vers l'avant et
- que l'extrémité inférieure (103) du deuxième réflecteur (98) est relié avec l'extrémité supérieure (105) du troisième réflecteur (99) par une traverse de jonction (91) à un écart défini et
- la zone finale supérieure (107) du premier réflecteur (97) est reliée avec la zone finale supérieure (109) du deuxième réflecteur(98) par des traverses de jonction coudées (92, 93) pour stabiliser.

**6.** Dispositif de mesure selon une ou plusieurs des spécifications de brevet 1 à 5
**caractérisé en ce que**
un réflecteur, à savoir le premier réflecteur (97) ou le deuxième réflecteur (98), du groupe de réflecteurs haut/étroit (7a) est remplacé par une bande rétroréflectrice (8) collée directement sur le manche de crosse (25) et qui est placée à un écart défini par rapport aux deux autres réflecteurs (97, 99 ou 98, 99).

**7.** Dispositif de mesure selon une ou plusieurs des spécifications de brevet 1 à 4,
**caractérisé en ce que**
un deuxième groupe de réflecteurs bas/large selon l'invention (7) dispose de cinq réflecteurs (19, 20, 21, 22, 23), trois réflecteurs (19, 21, 23) étant parallèles les uns aux autres à un niveau et à un écart exactement défini et le premier réflecteur (19) et le troisième réflecteur (21) étant reliés entre eux par le deuxième réflecteur (20), si bien qu'ils constituent un "N" parallèle ou un "N" inversé et que le quatrième réflecteur (22) est disposé en dehors de la zone, mais toutefois parallèle et à la même distance du troisième réflecteur (21) et du cinquième réflecteur (23), si bien que l'on puisse reconnaître un triangle entre le troisième réflecteur (21), le quatrième réflecteur (22) et le cinquième réflecteur (23) en regardant au dessus du groupe de réflecteurs.

**8.** Dispositif de mesure selon une ou plusieurs des spécifications de brevet 1 à 7
**caractérisé en ce que**
le groupe de réflecteurs (7, 7a) est placé sur la crosse de golf (1) de manière à ce que les réflecteurs (19, 21, 22, 23, 97, 98) soient à la verticale par rapport au sol de frappe (18) quand la crosse de golf (1) est inclinée en position d'action.

**9.** Dispositif de mesure selon une ou plusieurs des spécifications de brevet 1 à 8,
**caractérisé en ce que**
le groupe de réflecteurs (7, 7a) est placé sur la crosse de golf (1) de manière à ce que les réflecteurs (19, 21, 22, 23, 97, 98) soient disposés en parallèle par rapport au manche (25) de la crosse de golf (1).

**10.** Dispositif de mesure selon une ou plusieurs des spécifications de brevet 1 à 9
**caractérisé en ce que**
une cinquième barrière lumineuse à réflexion (56) avec un rayon (65) est disposée dans la paroi frontale (64) de l'appareil de mesure (3), au-dessus de la troisième barrière lumineuse à réflexion (45) et qu'une sixième barrière lumineuse à réflexion avec un rayon (57) est disposée au-dessus de la quatrième barrière lumineuse à réflexion (55) et que l'écart de la première barrière lumineuse à réflexion (4), disposée l'une au dessus de l'autre, par rapport à la cinquième barrière lumineuse à réflexion (56) dans le premier groupe de barrières lumineuses à réflexion (4, 45, 56) ainsi que l'écart de la deuxième barrière lumineuse à réflexion (5) par rapport à la sixième barrière lumineuse à réflexion (57) dans le deuxième groupe de barrières lumineuses à réflexion (5, 55, 57) doit être d'au moins 7 cm.

**11.** Dispositif de mesure selon une ou plusieurs des spécifications de brevet 1 à 10,
**caractérisé en ce que**
les barrières lumineuses à réflexion (4, 5, 45, 55, 56, 57) sont des barrières lumineuses à réflexion à laser à réaction rapide et que leurs rayons (10, 15, 78, 79, 65, 66) sont des rayons de lumière laser pulsés à haute fréquence et que les réflecteurs (19, 20, 21, 22, 23, 97, 98, 99) présentent au moins la même largeur, au mieux le double de la largeur des rayons (10, 15, 78, 79, 65, 66).

12. Dispositif de mesure selon un ou plusieurs des spécifications de brevet 1 à 11,
**caractérisé en ce que**
un laser lignes optiques (26) est disposé dans l'appareil de mesure (3) en supplément à l'horizontale dans un angle de 90° sur la balle de golf (14) de sorte que son rayon (27) atteigne la surface extérieure (28) à l'opposé de la direction de vol (29) de la balle de golf (14), la surface extérieure (28) constituant simultanément le point de rencontre idéal (2) pour la tête de crosse (12).

13. Dispositif de mesure selon une ou plusieurs des spécifications de brevet 1 à 12,
**caractérisé en ce que**
l'appareil de mesure (3) est conçu en forme de L et qu'un deuxième laser lignes optique (68) ou un laser multilignes est placé en supplément dans la paroi transversale (54) de l'appareil de mesure (3), les rayons (87) resp. rayons de ce laser lignes optique ou laser multilignes étant émis dans un angle ≤ 45°par rapport à la balle de golf (14) et le point de croisement des rayons (26, 68) servant à l'alignement de la balle de golf (14) et/ou du tee (13).

14. Dispositif de mesure selon une ou plusieurs des spécifications de brevet 1 à 13
**caractérisé en ce que**
les barrières lumineuses à réflexion du premier groupe de barrières lumineuses à réflexion (4, 45, 56) sont placées dans un angle de 90° dans la paroi frontale (64) et que leurs rayons (10, 78, 65) au parcours horizontal par rapport au sol de frappe (18) et parralèle entre eux sont orientés sur le groupe de réflecteurs (7, 7a) au-dessus d'un point de frappe (47) pour le jeu de golf sans balle de golf et que les barrières lumineuses à réflexion du deuxième groupe de barrières lumineuses à réflexion (5, 55, 57) sont placées de préférence dans un angle de 45° dans la paroi frontale (64) et que leurs rayons (15, 79, 66) au parcours horizontal par rapport au sol de frappe (18) et parralèle entre eux (15, 79, 66) croisent les rayons (10, 78, 65) du premier groupe de barrières lumineuses à réflexion (4, 45, 56) au maximum 10 cm derrière le point de frappe (47) et derrière le trajet idéal (11) et/ou que le tee (13) vu du joueur de golf (9) à gauche du point de frappe (47) potentiel est placé à un écart, qui correspond au moins à la moitié de la largeur du groupe de réflecteurs (7, 7a) et que la tête de crosse (12) atteint la balle de golf (14) placée sur le tee (13), directement après que le groupe de réflecteurs (7, 7a) a quitté la zone des rayons (10,78, 65) du premier groupe de barrières lumineuses à réflexion (4, 45, 56).

15. Dispositif de mesure selon la spécification de brevet 14
**caractérisé en ce que**
un laser d'ajustement (129, 130) peut être respectivement placé en supplément pour l'alignement électronique exact de l'appareil de mesure (3) dans la paroi frontale (64) et dans la partie avant de la paroi transversale (54), les rayons (131, 132) se rencontrant sur une ligne déterminée sur le patron mis sur le tee (13) dès que l'appareil de mesure se trouve dans la position nécessaire pour la réalisation exacte des mesures.

16. Dispositif de mesure selon une ou plusieurs spécifications 1 à 15
**caractérisé en ce que**
une huitième barrière lumineuse à réflexion (104) placée dans un angle de 90° dans la paroi frontale (64) de l'appareil de mesure (3) à droite ou à gauche de la première barrière lumineuse à réflexion (4) et qu'une neuvième barrière lumineuse à réflexion (102) avec ses rayons (108, 110) de même placée dans un angle de 90° à côté de la troisième barrière lumineuse à réflexion (45) au-dessus de la huitième barrière lumineuse à réflexion (104) et qu'une dixième barrière lumineuse à réflexion (100) est placée dans un angle de 45° à droite ou à gauche de la quatrième barrière lumineuse à réflexion (55) et que l'écart latéral des barrières lumineuses à réflexion (4, 104 et/ou 45, 102 et/ou 55, 100) correspond à la largeur du groupe de réflecteurs (7) bas/large composé de cinq réflecteurs (19, 20, 21, 22, 23) ou à la largeur double du groupe de réflecteurs haut/étroit (7a) composé de deux ou trois réflecteurs (97, 98, 99).

17. Dispositif de mesure selon une ou plusieurs spécifications de brevet 1 à 16,
**caractérisé en ce que**
le dispositif de saisie des données de mesure (6) saisie le modèle de temps des réflexes du groupe de réflecteurs (7, 7a) pendant la lancée de golf et le transmet à l'unité d'analyse, d'information et d'enregistrement (17), qui est de préférence un PC normal ou un notebook, et que le calcul des facteurs de moment d'impact

    a) vitesse de tête de crosse,
    b) position de surface de frappe en tant qu'angle ouvert/fermé $W_{og}$,
    c) sweetspot vertical en tant que divergence verticale du [?] sweetspot

d) sweetspot horizontal en tant que divergence horizontale du [?] sweetspot,

e) angle d'arrivée horizontale $W_{io}$ et dans certaines conditions

f) loft dynamique $W_{dl}$

est effectué complètement ou en partie à partir des données de mesure de la lancée de golf, selon le besoin et l'objectif d'entraînement.

18. Dispositif de mesure selon une ou plusieurs des spécifications 1 à 17
**caractérisé en ce que**
l'appareil de mesure (3) est monté symétriquement par rapport à son niveau moyen horizontale et peut être utilisé aussi bien par les droitiers que par les gauchers, un détecteur de position intégré assurant que par exemple la barrière lumineuse à réflexion (56) à disposition inversée assume la fonction de la première barrière lumineuse à réflexion (4) et la sixième barrière lumineuse à réflexion (57) à disposition inversée assume la fonction de la deuxième barrière lumineuse à réflexion (5).

19. Dispositif de mesure selon une ou plusieurs spécifications de brevet 1 à 18,
**caractérisé en ce que**
une autre septième barrière lumineuse à réflexion avec un rayon (81), qui a un trajet parallèle aux rayons (10, 78, 65) du premier groupe de barrières lumineuses à réflexion (4, 45, 56), peut être placé en supplément dans l'appareil de mesure (3) pour la détermination du facteur de moment d'impact loft dynamique $W_{dl}$, un des réflecteurs (19, 21, 23) du groupe de réflecteurs bas/large (7),
de préférence le troisième réflecteur (21), étant prolongé par une rallonge de barre de réflecteur (82) ou qu'une surface rétroréflectrice (8) est placée au-dessus du groupe de réflecteurs (7) directement sur le manche de crosse (25).

20. Dispositif de mesure selon la spécification de brevet 19,
**caractérisé en ce que**
la septième barrière lumineuse à réflexion est positionnée de manière pivotante au moyen d'un mécanisme pliant dans la paroi plafonnière (73) et/ou le dessous (74) de l'appareil de mesure (3), et est fixée comme pièce supplémentaire au moyen d'un connecteur.

21. Dispositif de mesure selon une ou plusieurs spécifications de brevet 1 à 20,
**caractérisé en ce que,**
un transceiver grande vitesse à radar (51) est disposé dans la partie avant de la paroi transversale [du côté?] (54) et est orienté à l'horizontale en direction de la balle de golf et/ou du tee, qui mesure en alternative en suppplément le facteur de moment d'impact vitesse de tête de crosse en action conjointe avec l'une des barrières lumineuses à réflexion du premier groupe de barrières lumineuses à réflexion (4, 45, 56) et le cinquième réflecteur (23) du groupe de réflecteurs bas/large (7) ou le deuxième réflecteur (98) du groupe de réflecteurs haut/étroit (7a) par mesure à double fréquence et
que le transceiver grande vitesse à radar (51) saisie en supplément la vitesse de tête de crosse comme fonction de temps, pendant que la tête de crosse (12) reste dans la zone du rayon radar (53), le trajet de la vitesse de tête de crosse pouvant être calculé comme fonction de la position de tête de crosse avec la référence de temps aux impulsions du premier groupe de barrières lumineuses à réflexion (4, 45, 56).

22. Dispositif de mesure selon une ou plusieurs des spéciafications 1 à 21
**caractérisé en ce que**
l'appareil de mesure (3) est équipé d'un microprocesseur ou d'un processeur de signaux pour le déclenchement de l'opération de mesure en elle-même,
le transceiver grande vitesse à radar (51) reconnaissant les mouvements d'oscillation de la crosse de golf (1) par radar Doppler avec un mélangeur en phase/quadrature lors de la phase de préparation de la lancée de golf ainsi que reconnaissant la direction de mouvement et ne démarrant l'opération de mesure qu'à partir d'une certaine vitesse déterminée dans la propre alternance inverse.

23. Dispositif de mesure selon une ou plusieurs spécifications 1 à 22
**caractérisé en ce que**
le dispositif de saisie des données de mesure (6) se compose d'une carte son ou d'une unité de saisie multicanaux et de traitement, qui est équipée du logiciel nécessaire pour l'analyse des données de mesure et que l'unité d'analyse, d'information et d'enregistrement (17) ou une batterie intégrée dans l'axe transversal (54) alimente l'appareil de mesure en courant, quand il n'y a pas de raccord de courant externe.

**24.** Dispositif de mesure selon une ou plusieurs spécifications de brevet 1 à 23
**caractérisé en ce que**
l'appareil de mesure (3) est équipé de roues (58, 59) sur son axe transversal (86) et respectivement d'une poignée (60, 61) au-dessus et en dessous de l'axe longitudinal (63) dans la zone du laser lignes optique (26) et que les poignées (60, 61) servent simultanément de pieds pour l'appareil de mesure (3) dans la fonction pour droitiers et gauchers, la hauteur des poignées et le diamètre des roues assurant la position horizontale de l'appareil de mesure (3).

**25.** Dispositif de mesure selon une ou plusieurs spécifications 1 à 24
**caractérisé en ce que**
divers interrupteurs (62) déclencheurs optiques ou électrosensibles, pouvant être actionnés avec la tête de crosse (1) sont placés dans la paroi frontale (64) de l'appareil de mesure (3), permettant le démarrage ou l'initialisation d'un programme avec la crosse, sans que le joueur (9) doive à cet effet actionner de la main l'unité d'analyse, d'information et d'enregistrement (17).

**26.** Dispositif de mesure selon une ou plusieurs spécifications de brevet 1 à 25,
**caractérisé en ce que**
une ou plusieurs barrières lumineuses à réflexion du premier groupe de barrières lumineuses à réflexion (4, 45, 56) donnent une impulsion pour le démarrage d'autres appareils d'analyse externes raccordés.

**27.** Dispositif de calibrage pour la mesure d'écarts angulaires pour le dispositif de mesure selon la spécification de brevet 1,
**caractérisé en ce que**
le dispositif de calibrage se compose de

a) un calibreur (133) avec au moins une barrière lumineuse à réflexion tournante (137),
b) un dispositif d'ajustement mécanique (134), qui est placé à un écart exact du calibreur (133), le dispositif d'ajustement (134) étant doté d'un élément de butée (136) pour la lame de crosse (69) de la tête de crosse (12) ainsi que de
c) au moins deux réflecteurs (138, 139) à surfaces rétroréflectrices (8), qui sont placés derrière le groupe de réflecteurs (7, 7a) à calibrer, à droite et à gauche et sur le côté à l'écart de celui-ci,
et que le dispositif de calibrage
d) mesure l'écart d'angle d'un angle de 90° du groupe de réflecteurs (7, 7a) fixé sur le manche (25) de la crosse de golf (1) à vue d'oeil à peu près à angle droit par rapport à la lame (69) de la tête de crosse.

**28.** Dispositif de calibrage selon la spécification de brevet 27
**caractérisé en ce que**
le dispositif de calibrage est intégré dans l'appareil de mesure (3) selon la spécification de brevet 1 et
que le calibrateur (133) est placé à peu près au milieu dans la paroi frontale (64) de l'appareil de mesure (3) et
le dispositif d'ajustement (134) s'engage à peu près au milieu entre le calibrateur (133) et
la paroi [latérale ?] transversale (54) au bas de l'appareil de mesure (3) à une position définie dans un ancrage (135) [où il reste logé sans pouvoir] glisser et que les deux réflecteurs (138, 139) du dispositif de calibrage sont fixés définitivement chacun à une extrémité de la partie avant de la paroi transversale (54).

**29.** Dispositif de calibrage selon la spécification de brevet 27 et/ou 28
**caractérisé en ce que**
l'angle d'ouverture de rayon de la barrière lumineuse à réflexion tournante (137) est de < 0,1 à 0,2° et que son rayon (140) se déplace entre les deux réflecteurs (138, 139) du dispositif de calibrage en tournant une fois ou plusieurs fois à vitesse angulaire régulière et que la lame de crosse (69) alignée à l'élément de butée (136) du dispositif d'ajustement (134) présente un angle de 90° par rapport au groupe de réflecteurs (7, 7a) fixé de manière optimale sur le manche de crosse (25), le récepteur du calibreur (133) recevant pendant l'opération de calibrage des données de mesure du rayon tournant réfléchi (140) par les réflecteurs (19, 20, 21, 22, 23, 97, 98, 99) du groupe de réflecteurs (7, 7a) sur les écarts réels du groupe de réflecteurs (7, 7a) par rapport au sweetspot et sur la rotation réelle du groupe de réflecteurs autour de l'axe vertical, les données de mesure scannées étant transmises au dispositif de saisie de données de mesure (6) et traitées dans l'unité d'analyse, d'information et d'enregistrement (17).

**30.** Dispositif de calibrage selon une ou plusieurs spécifications de brevet 27 à 29
**caractérisé en ce que**

que les données de calibrage et les données de mesure sont alignées par l'unité d'analyse, d'information et d'enregistrement (17) pendant la lancée de golf par calcul d'un facteur de correction, quand le groupe de réflecteurs (7, 7a) a été fixé dans un angle divergent de 90° par rapport à la lame (69) sur le manche de crosse (25).

Fig. 1

Fig. 2

Fig.3

Fig. 4

Fig. 5

EP 1 937 372 B1

Fig. 6

EP 1 937 372 B1

**Fig. 7**

Fig. 8

Fig. 9

Fig. 10

EP 1 937 372 B1

**Fig. 11**

Fig. 12

Fig. 13

EP 1 937 372 B1

Fig. 16

Fig. 15

Fig. 14

**Fig. 17**

Fig. 18

EP 1 937 372 B1

**EP 1 937 372 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4304406 A
- US 4254956 A
- US 4306722 A
- US 6095928 A
- WO 9818010 A
- US 20050130755 A1
- DE 10103449 A1
- DE 10119740 A1
- US 20030054898 A1
- US 20050202907 A1
- WO 9949944 A
- WO 2004067099 A2
- US 5803823 A